# EUROPEAN PATENT SPECIFICATION

(11) **EP 4 475 462 B1**
(45) Date of publication and mention of the grant of the patent: **04.03.2026**
(21) Application number: 22932091.6
(22) Date of filing: 17.03.2022
(51) Int. Cl.: H04B 10/61, H04J 14/06

(54) **OPTICAL RECEIVING DEVICE**
OPTISCHE EMPFANGSEINRICHTUNG
DISPOSITIF DE RÉCEPTION OPTIQUE

(43) Date of publication of application: 11.12.2024
(73) Proprietor: MITSUBISHI ELECTRIC CORPORATION, Chiyoda-ku Tokyo 100-8310 (JP)
(72) Inventor: SANO, Hayato, Tokyo 100-8310 (JP); MATSUDA, Keisuke, Tokyo 100-8310 (JP)
(74) Representative: Plasseraud IP
(86) International application number: PCT/JP2022/012112
(87) International publication number: WO 2023/175815

(56) References cited:
- WO-A1-2018/084106
- JP-A- 2010 093 378
- JP-A- 2010 093 378
- JP-A- 2013 207 603
- JP-A- 2019 115 003
- US-A1- 2013 107 341

## Description

### TECHNICAL FIELD

The present disclosure relates to an optical receiving device.

### BACKGROUND ART

In the field of optical fiber communication, digital coherent technologies are widely applied in metro core networks and submarine optical cable systems.

Further, in the field of wireless communication, the fifth generation of wireless access networks has been partially introduced in recent years, in which user signals with various requirements having different indexes such as large capacity, high reliability, and low delay are handled, and further improvement of such index values is mentioned in a future sixth generation wireless access network.

In fronthaul to backhaul constituting a current wireless access network, optical communication is applied to transmission of a user signal.

On the other hand, not only a wireless access network but also a technology of transmitting various heterogeneous services such as a cryptographic signal, a video system, and an existing internet protocol (IP) in an optical network including a core metro so as to satisfy their respective requirements is currently introduced as a network slicing technology, and further development of such a technology is expected.

In response to such a background, an optical network capable of transmitting optical signals of various heterogeneous services will be developed in the future, and an optical receiving device capable of simultaneously accommodating these is expected to be required.

For such advancement of optical networks, one optical transceiver of a digital coherent method is being provided with communication rates from 100 Gbps to 800 Gbps or more. On the other hand, depending on the service, a channel signal that does not use all bands of the optical transceiver may be handled, and if a plurality of heterogeneous services can be simultaneously accommodated by one optical transceiver, it is possible to achieve hardware utilization efficiency and space saving.

Under such a background, Non Patent Literature 1 discloses an optical receiving device that receives an optical signal in which a plurality of subcarriers is multiplexed.

### CITATION LIST

### NON PATENT LITERATURE

Non Patent Literature 1: H. Sun et al, "800G DSP ASIC Design Using Probabilistic Shaping and Digital Sub-Carrier Multiplexing", JOURNAL OF LIGHTWAVE TECHNOLOGY, VOL. 38, NO. 17, SEPTEMBER 1, 2020, p.p.4744-4756

Optical receiving devices according to the state of the art are known from US2013107341 and JP2010093378.

### SUMMARY OF INVENTION

### TECHNICAL PROBLEM

In the optical receiving device disclosed in Non Patent Literature 1, because a voltage signal detected by optical coherent detection and output is converted into a digital signal by an analog-to-digital converter (ADC), an optical signal in which a plurality of subcarriers is multiplexed is widened in bandwidth, and widening of a bandwidth of an analog-digital converter in the optical receiving device is also required at the same time along with widening of a bandwidth of the optical signal.

However, achievement of an analog-digital converter that is required to be of a broadband and a high sampling rate has a problem such as spurious due to interleaving.

The present disclosure has been made to solve the above problem, and an object of the present disclosure is to obtain an optical receiving device capable of performing analog-digital conversion on an optical signal in which a plurality of subcarriers is multiplexed, that is, an optical signal in which a plurality of channels is frequency-multiplexed without using an analog-digital converter that is required to be of a broadband and a high sampling rate.

### SOLUTION TO PROBLEM

An optical receiving device according to the present disclosure includes an optical coherent detecting unit; an analog signal separating unit; an analog-digital converting unit which is not required to be of a broadband and a high sampling rate; a channel separating unit; and a channel individual demodulating unit, wherein the optical coherent detecting unit causes an optical signal in which a plurality of channels is frequency-multiplexed to interfere with single interference light and performs coherent detection, and outputs an analog electrical signal, the analog signal separating unit branches the analog electrical signal from the optical coherent detecting unit by the number of branches of N (N is a natural number of 2 or more) in a frequency domain, and outputs analog electrical signals branched in the frequency domain as respective analog electrical signals each of which is frequency-converted into a frequency equal to or lower than a set frequency, the set frequency being set on a basis of a frequency domain in which the analog-digital converting unit can perform analog-digital conversion, the analog-digital converting unit performs the analog-digital conversion on each of the analog electrical signals branched by the analog signal separating unit and converted into the frequency equal to or lower than the set frequency, and outputs resultant signals as digital signals, the channel separating unit performs frequency conversion on the digital signals output from the analog-digital converting unit in a digital domain, returns the digital signals to baseband signals, and frequency-separates the baseband signals, corresponding to the plurality of channels, and the channel individual demodulating unit demodulates each of the signals frequency-separated by the channel separating unit to obtain a digital signal of a corresponding one of the plurality of channels.

### ADVANTAGEOUS EFFECTS OF INVENTION

According to the present disclosure, the analog signal separating unit branches the analog signal from the optical coherent detecting unit by the number of branches of N in the frequency domain, and outputs the branched analog signals as the respective analog signals each of which is frequency-converted into the frequency equal to or lower than the set frequency. Thus, analog-digital conversion can be performed on an optical signal in which a plurality of channels is frequency-multiplexed without using an analog-digital converter that is required to be of a broadband and a high sampling rate.

### BRIEF DESCRIPTION OF DRAWINGS

FIG. 1 is a configuration diagram illustrating a configuration of an optical receiving device according to a first embodiment.
FIG. 2 is a diagram illustrating a hardware configuration of the optical receiving device according to the first embodiment.
FIG. 3 is a diagram for describing signal separation of one lane in the optical receiving device according to the first embodiment.
FIG. 4 is a diagram illustrating a setting example of a carrier frequency of interference light in the optical receiving device according to the first embodiment.
FIG. 5 is a diagram illustrating another setting example of the carrier frequency of interference light in the optical receiving device according to the first embodiment.
FIG. 6 is a configuration diagram illustrating a configuration of an optical receiving device according to a second embodiment.
FIG. 7 is a diagram illustrating a setting example of a carrier frequency of interference light in the optical receiving device according to the second embodiment.
FIG. 8 is a configuration diagram illustrating another configuration of the optical receiving device according to the second embodiment.
FIG. 9 is a configuration diagram illustrating a configuration of an optical receiving device according to a third embodiment.
FIG. 10 is a diagram illustrating a setting example of a carrier frequency of interference light in the optical receiving device according to the third embodiment.
FIG. 11 is a diagram illustrating another setting example of the carrier frequency of interference light in the optical receiving device according to the third embodiment.

### DESCRIPTION OF EMBODIMENTS

### First Embodiment.

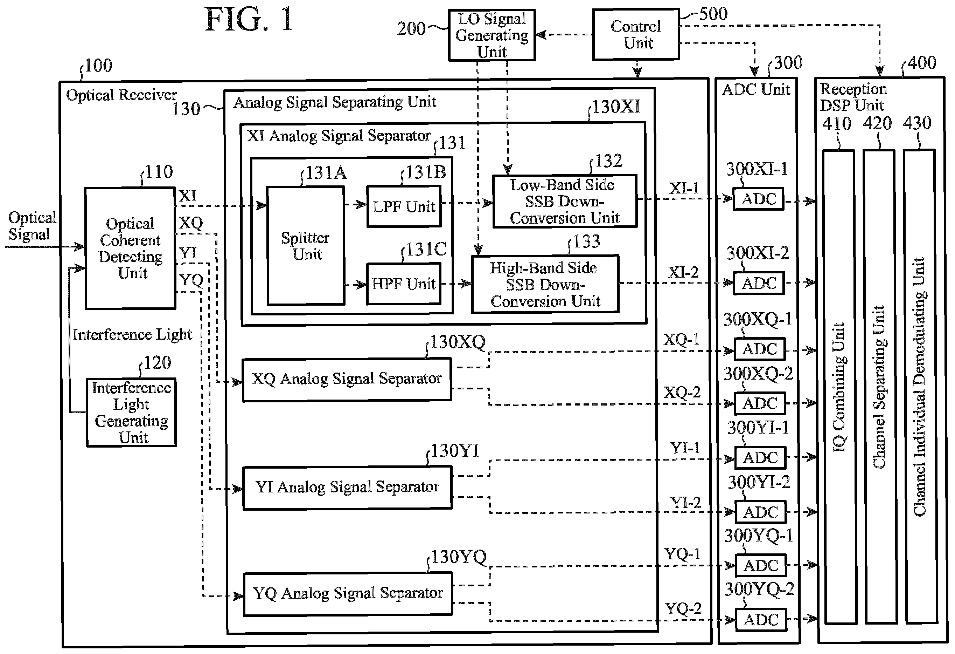

An optical receiving device according to a first embodiment will be described with reference to FIGS. 1 to 4.

In the drawings, a solid arrow indicates a flow of an optical signal, and a broken arrow indicates a flow of an electrical signal.

The optical receiving device according to the first embodiment is a device focusing on a receiving function of a communication device and an optical transceiver that perform transmission and reception of optical signals in an optical communication network system using an optical fiber in an optical access and an optical core/metro network as a transmission medium and an optical communication network system that does not use an optical fiber and uses a wireless space assuming space, space optical communication, and the like as a transmission medium.

In an actual system, the optical receiving device according to the first embodiment is included in the same housing together with an optical transmitter and a control device that controls the optical transmitter.

Note that, as the optical transmitter and the control device that controls the optical transmitter, normally known devices such as a transmission side digital signal processor (DSP), a digital analog (D/A) converter, and an optical modulator are used, and thus, description thereof is omitted.

The optical signal received by the optical receiving device according to the first embodiment is an optical signal in which a plurality of channels is frequency-multiplexed, and the optical signal of each channel is assumed to be an optical signal that is polarization-multiplexed into an X-polarized wave and a Y-polarized wave by a digital coherent method, and each of the X-polarized wave and the Y-polarized wave is modulated into an I signal and a Q signal of orthogonal phases. For example, the X-polarized wave is a horizontally polarized wave, and the Y-polarized wave is a vertically polarized wave.

The number of channels frequency-multiplexed is M (M is an even number of 2 or more).

That is, the first embodiment assumes, as an example, an optical receiving device that receives an optical signal in which M channels by M subcarriers of different frequencies in X-polarized wave and M channels by M subcarriers of different frequencies in Y-polarized wave are multiplexed.

In general, when X-polarized waves of M channels and Y-polarized waves of M channels are multiplexed, they are regarded as M channels.

However, the X-polarized waves of the M channels and the Y-polarized waves of the M channels can be regarded as independent signals, and can be regarded as a total of 2M channels.

The I signal and the Q signal of the orthogonal phases in each channel are optical signals by a modulation/demodulation method using orthogonality such as binary phase shift keying (BPSK), quadrature phase shift keying (QPSK), or quadrature amplitude modulation (QAM).

Note that each channel is assumed to be a channel corresponding to a homogeneous service or a heterogeneous service.

In the following description, the I signal in the X-polarized wave is referred to as an XI signal, and also in the optical receiving device, an electrical signal by the I signal in the X-polarized wave is referred to as an XI signal. Further, since the XI signal is output from an independent lane on the transmission side, a lane in which an electrical signal by the XI signal flows in the optical receiving device is also referred to as an XI lane.

Similarly, the Q signal in the X-polarized wave is referred to as an XQ signal and the lane is referred to as an XQ lane, the I signal in the Y-polarized wave is referred to as a YI signal and the lane is referred to as a YI lane, and the Q signal in the Y-polarized wave is referred to as a YQ signal and the lane is referred to as a YQ lane.

The optical receiving device according to the first embodiment includes an optical receiver 100, an LO signal generating unit (Local Oscillator) 200 that is a local oscillator, an analog-to-digital converter (ADC) unit 300 that is an analog-to-digital converter, a received digital signal processor (DSP) unit 400, and a control unit 500.

The optical receiver 100 includes an optical coherent detecting unit 110, an interference light generating unit 120, and an analog signal separating unit 130.

The optical coherent detecting unit 110 receives an optical signal transmitted by an optical fiber or the like from the optical transmitting device, and performs optical coherent detection of causing the received optical signal to interfere with interference light having a single carrier frequency fc from the interference light generating unit 120 and outputting an analog electrical signal based on a voltage obtained by photoelectrically converting the optical signal obtained by the interference. The voltage signal output from the optical coherent detecting unit 110 is a single-ended output or a differential output.

In the first embodiment, analog electrical signals output from the optical coherent detecting unit 110 are four signals of an XI signal, an XQ signal, a YI signal, and a YQ signal output from respective four output terminals.

Taking an optical signal in which a plurality (four) of channels is frequency-multiplexed as an example, each of the four signals of the XI signal, the XQ signal, the YI signal, and the YQ signal is an analog electrical signal obtained by causing an optical signal in which signals modulated by carriers of four different frequencies, that is, subcarriers are frequency-multiplexed and single interference light from the interference light generating unit 120 to interfere with each other and performing coherent detection.

Note that the number of channels frequency-multiplexed is not limited to four, and may be M which is four or more. That is, the number of channels frequency-multiplexed only needs to be plural.

The analog electrical signal output from the optical coherent detecting unit 110 is based on an optical signal in which a plurality of channels is frequency-multiplexed, and thus has a broadband frequency band, for example, a broadband signal component ranging from a gigahertz class to several tens of gigahertz class as the highest frequency, or 100 GHz or more.

Note that the XI signal, the XQ signal, the YI signal, and the YQ signal are mixed at the four output terminals due to polarization rotation or the like generated during transmission by an optical fiber or the like from the optical transmitting device to the optical receiving device, but the mixture is demodulated by being returned to the original state by the reception DSP unit 400 at the subsequent stage.

The optical coherent detecting unit 110 includes an interferometer, a polarization beam separator, an optical 90-degree hybrid, four photodiodes, and four trans-impedance amplifiers (TIA), and has a function of obtaining a reception signal including electrical signals of four lanes of the XI signal, the XQ signal, the YI signal, and the YQ signal.

The interferometer causes the received optical signal to interfere with the interference light from the interference light generating unit 120 and emits light generated by the interference.

The polarization beam separator separates the received optical signal into an optical signal of an X-polarized wave and an optical signal of a Y-polarized wave, appropriately controls each of polarization states thereof, and inputs the signals to the optical 90-degree hybrid.

The optical 90-degree hybrid obtains an I signal and a Q signal which are optical signals by causing each of the optical signal of the X-polarized wave and the optical signal of the Y-polarized wave from the polarization beam separator to interfere with the interference light. That is, four optical signals of the I signal and the Q signal in the X-polarized wave and the I signal and the Q signal in the Y-polarized wave are output from the optical 90-degree hybrid.

The polarization beam separator and the optical 90-degree hybrid have functions of performing polarization separation, optical multiplexing and branching, and optical delay for obtaining four optical signals of the XI signal, the XQ signal, the YI signal, and the YQ signal from an optical signal generated by interference between the received optical signal and the interference light.

Each of the four photodiodes is provided corresponding to the corresponding one of the four optical signals from the optical 90-degree hybrid, and each photodiode converts the corresponding optical signal into a current by photoelectric conversion to obtain an electrical signal.

The four TIAs are provided corresponding to the respective four photodiodes, each TIA converts an electrical signal by a current from the corresponding photodiode into an electrical signal by a voltage, and each TIA outputs the corresponding one of an XI signal, an XQ signal, a YI signal, and a YQ signal, which are electrical signals by amplified voltages.

The four photodiodes and the four TIAs have a function of obtaining the XI signal, the XQ signal, the YI signal, and the YQ signal that are four electrical signals by voltages from the XI signal, the XQ signal, the YI signal, and the YQ signal that are four optical signals.

Each of the four electrical signals of the XI signal, the XQ signal, the YI signal, and the YQ signal output from the optical coherent detecting unit 110 is a signal output as a voltage signal obtained by frequency-converting a signal in a frequency domain of light on the basis of the single carrier frequency fc from the interference light generating unit 120.

Each of the four signals of the XI signal, the XQ signal, the YI signal, and the YQ signal includes a frequency-converted voltage signal in a frequency band based on subcarriers having different frequencies depending on the number of channels frequency-multiplexed.

Each of the four signals of the XI signal, the XQ signal, the YI signal, and the YQ signal is assumed to be a wideband voltage signal ranging from a gigahertz class to several tens of gigahertz class as the highest frequency, and a wideband voltage signal of 100 GHz or more is also assumed.

The optical coherent detecting unit 110 includes a generally known integrated coherent receiver (ICR: Integrated Digital Coherent Receiver:) corresponding to a polarization-multiplexed QPSK signal and QAM signal.

The interference light generating unit 120 outputs interference light that is continuous wave (CW) light having the single carrier frequency fc to the optical coherent detecting unit 110.

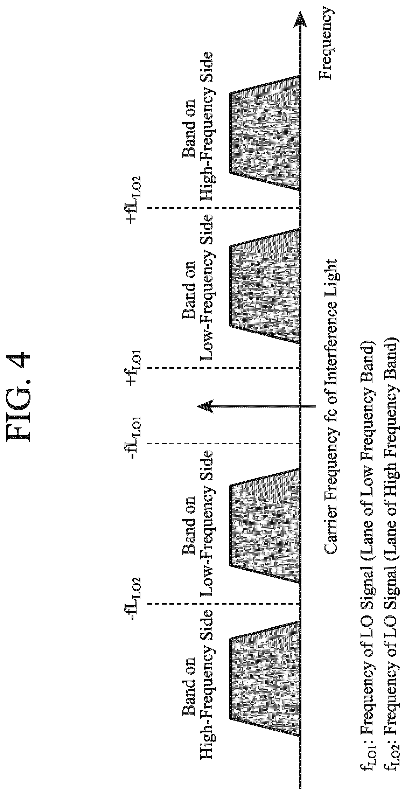

Taking an optical signal in which four channels are frequency-multiplexed as an example, the frequency fc of the interference light from the interference light generating unit 120 is set to a frequency to separate a signal component in a region of a positive frequency band and a signal component in a region of a negative frequency band with the frequency fc of the interference light being centrosymmetric in each of the X-polarized wave and the Y-polarized wave as illustrated in FIG. 4, and moreover a frequency at which the signal component is converted into a sufficiently small frequency domain to be obtained as an effective output from the optical coherent detecting unit 110.

In both the region of the positive frequency band and the region of the negative frequency band, a side close to the single carrier frequency fc of the interference light is a band on the low-frequency side, and a side far from the single carrier frequency fc is a band on the high-frequency side.

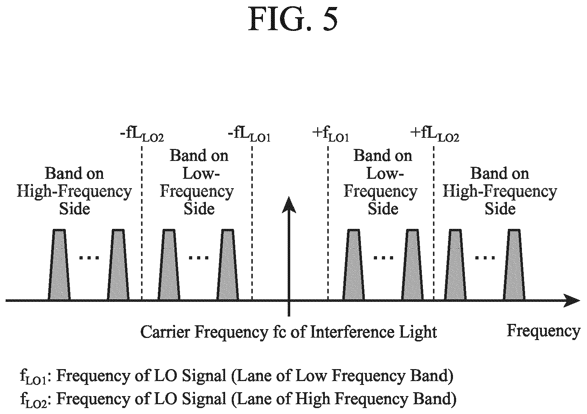

Further, in a case where the number of channels is M, which is an even number of 4 or more, the frequency fc of the interference light is also set to a frequency to separate a signal component in the region of the positive frequency band and a signal component in the region of the negative frequency band with the frequency fc of the interference light being centrosymmetric in each of the X-polarized wave and the Y-polarized wave as illustrated in FIG. 5, and moreover a frequency at which the signal component is converted into a sufficiently small frequency domain to be obtained as an effective output from the optical coherent detecting unit 110.

Both the region of the positive frequency band and the region of the negative frequency band are divided into two, in which a side close to the single carrier frequency fc of the interference light is the band on the low-frequency side, and a side far from the single carrier frequency fc is the band on the high-frequency side.

The interference light generating unit 120 is a light source having a narrow line width corresponding to the digital coherent method, and uses a light source used in generally known digital coherent optical communication.

The analog signal separating unit 130 includes an XI analog signal separator 130XI in the XI lane by the XI signal, an XQ analog signal separator 130XQ in the XQ lane by the XQ signal, a YI analog signal separator 130YI in the YI lane by the YI signal, and a YQ analog signal separator 130YQ in the YQ lane by the YQ signal.

To each of the XI analog signal separator 130XI, the XQ analog signal separator 130XQ, the YI analog signal separator 130YI, and the YQ analog signal separator 130YQ, an analog electrical signal corresponding to the corresponding one of the XI signal, the XQ signal, the YI signal, and the YQ signal from the optical coherent detecting unit 110 is input, and the input analog electrical signal is branched by the number of branches of N (N is a natural number of 2 or more) in the frequency domain. Each of the XI analog signal separator 130XI, the XQ analog signal separator 130XQ, the YI analog signal separator 130YI, and the YQ analog signal separator 130YQ outputs each analog signal branched in the frequency domain as an XI-1 signal, an XI-2 signal, an XQ-1 signal, an XQ-2 signal, a YI-1 signal, a YI-2 signal, a YQ-1 signal, or a YQ-2 signal, which is an analog signal frequency-converted into a frequency equal to or less than a set frequency.

Since the lanes through which the analog signals flow after being branched in the frequency domain are also independent up to the reception DSP unit 400, the lanes are referred to as an XI-1 lane, an XI-2 lane, an XQ-1 lane, an XQ-2 lane, a YI-1 lane, a YI-2 lane, a YQ-1 lane, and a YQ-2 lane with respect to the XI-1 signal, the XI-2 signal, the XQ-1 signal, the XQ-2 signal, the YI-1 signal, the YI-2 signal, the YQ-1 signal, and the YQ-2 signal, respectively.

Each of the XI analog signal separator 130XI, the XQ analog signal separator 130XQ, the YI analog signal separator 130YI, and the YQ analog signal separator 130YQ includes a signal separating unit 131, and a down-conversion unit including a low-band side down-conversion unit 132 and a high-band side down-conversion unit 133.

In each of the XI analog signal separator 130XI, the XQ analog signal separator 130XQ, the YI analog signal separator 130YI, and the YQ analog signal separator 130YQ, while only the signal input from the optical coherent detecting unit 110 is different as the XI signal, the XQ signal, the YI signal, and the YQ signal, the operation and function are substantially the same and similar analog processing is performed, and thus, the XI analog signal separator 130XI will be described below as a representative.

Note that, in a case where it is not necessary to distinguish and describe the four analog signal separators, they will be described as an analog signal separator 130 below in order to avoid complexity.

The signal separating unit 131 performs branching by the number of branches of N (N is a natural number of 2 or more) in the frequency domain, where N is 2 in the first embodiment, and performs separation into a signal component in the band on the low-frequency side and a signal component in the band on the high-frequency side.

That is, a frequency band on a side close to the frequency fc around the frequency fc of the interference light from the interference light generating unit 120 is defined as a band on the low-frequency side, and a frequency band on a side far from the frequency fc is defined as a band on the high-frequency side.

The signal separating unit 131 outputs the signal component in the band on the low-frequency side as the XI signal on the low-band side and the signal component in the band on the high-frequency side as the XI signal on the high-band side.

The signal separating unit 131 includes a splitter unit 131A, a low-band side passing unit 131B, and a high-band side passing unit 131C.

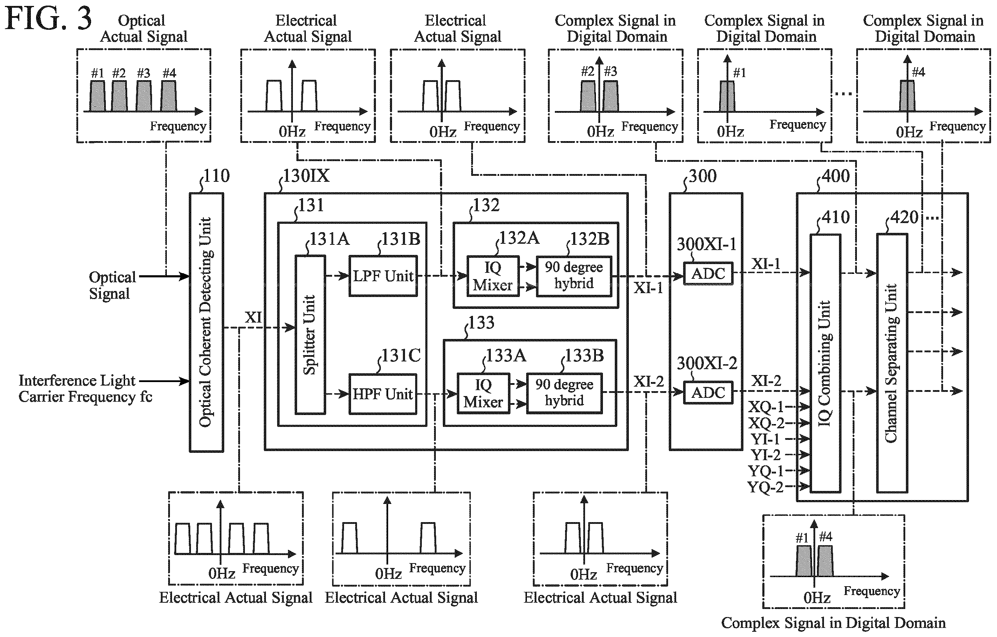

To the splitter unit 131A, the XI signal for frequency-multiplexed M channels, for example, the four channels illustrated in FIG. 3 is input, and the splitter unit branches the input XI signal into two analog electrical signals by the number of branches **of 2.**

One analog electrical signal of the two analog electrical signals is referred to as an XI signal on the low-band side for convenience, and the other analog electrical signal is referred to as an XI signal on the high-band side for convenience.

The low-band side passing unit 131B is a low-pass filter (LPF) to which the XI signal on the low-band side branched by the splitter unit 131A is input, and which passes the frequency band on the low-band side and blocks the frequency band on the high-band side. FIG. 3 illustrates an example in which the XI signal for four channels as examples is input, and the XI signal on the low-band side for two channels in the frequency band on the low-band side is output.

When the XI signal for the M channels is input, the XI signal on the low-band side for M/2 channels is output.

The high-band side passing unit 131C is a high-pass filter (HPF) to which the XI signal on the high-band side branched by the splitter unit 131A is input, and which passes the frequency band on the high-band side and blocks the frequency band on the low-band side. FIG. 3 illustrates an example in which the XI signal for four channels as examples is input, and the XI signal on the high-band side for two channels in a frequency band on the high-band side is output.

When the XI signal for the M channels is input, the XI signal on the high-band side for the M/2 channels is output.

The signal separating unit 131 forms a low-band side lane in which the XI signal that is an analog signal in the frequency band on the low-band side flows and a high-band side lane in which the XI signal that is an analog signal in the frequency band on the high-band side flows.

The XI signal flowing to the low-band side lane is an XI signal constituting M/2 channels, that is, two channels in the example illustrated in FIG. 3, and the XI signal flowing to the high-band side lane is an XI signal constituting the remaining M/2 channels, that is, two other channels in the example illustrated in FIG. 3.

Note that the signal separating unit 131 may be configured by a frequency selecting switch that separates the XI signal output from the optical coherent detecting unit 110 into a signal in the frequency band on the low-band side and a signal in the frequency band on the high-band side in the frequency domain and outputs the signals, instead of the configuration including the splitter unit 131A, the low-band side passing unit 131B, and the high-band side passing unit 131C.

The low-band side down-conversion unit 132 down-converts the XI signal on the low-band side from the low-band side passing unit 131B into a signal component in a frequency band equal to or lower than the set frequency, and outputs it as the XI-1 signal on the low-band side. As illustrated in FIG. 3 as an example, the XI signal on the low-band side from the low-band side passing unit 131B is output as the XI-1 signal that is an analog signal on the lower band side.

The set frequency is set on the basis of a frequency domain in which the ADC unit 300 which is not required to be of a broadband and a high sampling rate can perform A/D conversion.

The low-band side down-conversion unit 132 performs down-conversion by multiplication by a low-band LO signal from the LO signal generating unit 200.

As illustrated in FIG. 3, the low-band side down-conversion unit 132 includes an IQ mixer 132A, a 90-degree hybrid 132B, and the like, and is an SSB down-conversion unit on the low-band side that performs single sideband (SSB) down-conversion.

As illustrated in FIG. 4, the frequency of the low-band LO signal from the LO signal generating unit 200 is set to an absolute value f_{LO1} of the frequency on the lower side not including the signal component of the XI signal on the positive low-band side and the signal component of the XI signal on the negative low-band side in the XI signal flowing in the XI-1 lane.

The high-band side down-conversion unit 133 down-converts the XI signal on the high-band side from the high-band side passing unit 131C into a signal component in a frequency band equal to or lower than the set frequency, and outputs the XI-2 signal on the high-band side. As illustrated in FIG. 3 as an example, the frequency band of the XI signal on the high-band side from the high-band side passing unit 131C is lowered, and the signal is output as an XI-2 signal that is an analog signal in the frequency domain that can be A/D converted by the ADC unit 300.

The high-band side down-conversion unit 133 performs down-conversion by multiplication by a high-band LO signal from the LO signal generating unit 200.

As illustrated in FIG. 3, the high-band side down-conversion unit 133 includes an IQ mixer 133A, a 90-degree hybrid 133B, and the like, and is an SSB down-conversion unit that performs single sideband down-conversion.

As illustrated in FIG. 4, the frequency of the high-band LO signal from the LO signal generating unit 200 is set to an absolute value f_{LO2} of the frequency on the lower side not including the signal component of the XI signal on the positive high-band side and the signal component of the XI signal on the negative high-band side in the XI signal flowing in the XI-2 lane.

The LO signal generating unit 200 may be provided in a clock output function unit of the optical receiver 100.

In addition, the LO signal generating unit 200 may be provided in a clock output function unit of the reception DSP unit 400.

The ADC unit 300 is an aggregate of eight ADCs including an ADC 300XI-1, an ADC 300XI-2, an ADC 300XQ-1, an ADC 300XQ-2, an ADC 300YI-1, an ADC 300YI-2, an ADC 300YQ-1, and an ADC 300YQ-2, which correspond to the XI-1 lane of the XI signal, the XI-2 lane of the XI signal, the XQ-1 lane of the XQ signal, the XQ-2 lane of the XQ signal, the YI-1 lane of the YI signal, the YI-2 lane of the YI signal, the YQ-1 lane of the YQ signal, and the YQ-2 lane of the YQ signal, respectively.

Note that, in a case where it is not necessary to distinguish and describe the eight ADCs, they will be described below as the ADCs 300 in order to avoid complexity.

Each ADC 300 samples the electrical signal in an analog domain down-converted to a frequency equal to or lower than the set frequency by the corresponding lane, and converts the electrical signal into a digital signal which is a discrete signal in the digital domain.

That is, in the first embodiment, the ADC unit 300 includes an input terminal and an ADC independently for each of the eight lanes, performs conversion processing from an analog signal to a digital signal in parallel, and outputs the digital signals XI-1, XI-2, XQ-1, XQ-2, YI-1, YI-2, YQ-1, and YQ-2 converted into digital signals from eight output terminals.

Each ADC 300 uses a generally known single-ended or differential type.

Further, since each ADC 300 handles an analog signal down-converted to a frequency equal to or lower than the set frequency by the corresponding lane, a signal component in a broadband frequency band is not handled and the sampling rate is low, and thus it is not necessary to use an analog-digital converter that is required to be of a broadband and a high sampling rate, so that a problem such as spurious due to interleaving does not occur.

No distortion occurs in the digital signal after AD conversion from each ADC 300, and there is no possibility that the error rate of the optical signal increases.

The reception DSP unit 400 receives inputs of the digital signals XI-1, XI-2, XQ-1, XQ-2, YI-1, YI-2, YQ-1, and YQ-2 from the ADC unit 300, frequency-separates the frequency-multiplexed electrical signals in each of the X-polarized wave and the Y-polarized wave in the digital domain, and performs a series of digital signal processes on the frequency-separated signals in the digital domain, thereby compensating and demodulating wavelength dispersion and rotation of polarized waves generated during transmission by an optical fiber or the like from the optical transmitting device to the optical receiving device, phase rotation due to a frequency error between the received optical signal in the optical coherent detecting unit 110 and the interference light from the interference light generating unit 120, and the like.

The reception DSP unit 400 includes an IQ combining unit 410, a channel separating unit 420, and a channel individual demodulating unit 430.

With the digital signals XI-1, XI-2, XQ-1, XQ-2, YI-1, YI-2, YQ-1, and YQ-2 input in parallel from the ADC unit 300, the IQ combining unit 410 combines the I signal and the Q signal for the X-polarized wave to generate a complex signal in the digital domain for the X-polarized wave, and combines the I signal and the Q signal for the Y-polarized wave to generate a complex signal in the digital domain for the Y-polarized wave.

In the output from the IQ combining unit 410 corresponding to the X-polarized wave, FIG. 3 illustrates a complex signal of channels in which the frequencies of the subcarriers are the second and third frequency bands as an example of combining the I signal and the Q signal in the digital signals XI-1 and XQ-1 which are the frequency bands on the low-band side and a complex signal of channels in which the frequencies of the subcarriers are the first and fourth frequency bands as an example of combining the I signal and the Q signal in the digital signals XI-2 and XQ-2 which are the frequency bands on the high-band side.

Note that the first to fourth frequency bands in the optical region are assumed to have higher frequency bands from the first to fourth frequency bands.

Note that, even when the number of channels is M, a complex signal obtained by combining the I signal and the Q signal in the digital signals XI-1 and XQ-1 that are frequency bands on the low-band side and a complex signal obtained by combining the I signal and the Q signal in the digital signals XI-2 and XQ-2 that are frequency bands on the high-band side are output.

In this case, the complex signal on the low-band side and the complex signal on the high-band side each include a complex signal for channels corresponding to 1/2 of the number M of channels.

Similarly, the output from the IQ combining unit 410 corresponding to the Y-polarized wave indicates a complex signal obtained by combining the I signal and the Q signal in the digital signals YI-1 and YQ-1, which are frequency bands on the low-band side, and a complex signal obtained by combining the I signal and the Q signal in the digital signals YI-2 and YQ-2, which are frequency bands on the high-band side.

Also in this case, the complex signal on the low-band side and the complex signal on the high-band side each include a complex signal for channels corresponding to 1/2 of the number of channels.

The channel separating unit 420 performs frequency conversion on each of the complex signal on the low-band side and the complex signal on the high-band side corresponding to the X-polarized wave, and the complex signal on the low-band side and the complex signal on the high-band side corresponding to the Y-polarized wave, which are IQ-combined by the IQ combining unit 410, on the digital domain and returns the signal to a baseband signal, and removes other signal components with a digital filter or the like, thereby obtaining channels of the first to fourth frequency bands frequency-separated into the complex signals in the digital domain returned to the baseband signals as illustrated in FIG. 3 as an example.

That is, the channel separating unit 420 obtains complex signals in the digital domain corresponding to the plurality of channels returned to the baseband signals for the optical signal obtained by frequency-multiplexing the plurality of channels received by the optical receiving device.

The channel separating unit 420 outputs complex signals in the digital domain corresponding to the M channels returned to the baseband signals for the optical signal obtained by frequency-multiplexing the M channels in the X-polarized wave received by the optical receiving device, and outputs complex signals in the digital domain corresponding to the M channels returned to the baseband signals for the optical signal obtained by frequency-multiplexing the M channels in the Y-polarized wave.

The channel individual demodulating unit 430 demodulates the complex signal in the digital domain in each of the plurality of channels returned to the baseband signal by the channel separating unit 420 through digital signal processing used in a normal digital coherent method such as wavelength dispersion compensation, and obtains a digital signal in each of the plurality of channels.

The reception DSP 400 includes a reception DSP unit used in a normal digital coherent method.

That is, signal processing for frequency separation and demodulation in the digital domain by IQ combining, frequency conversion, and filtering by the reception DSP unit 400 is a general method in digital signal processing used in the normal digital coherent method.

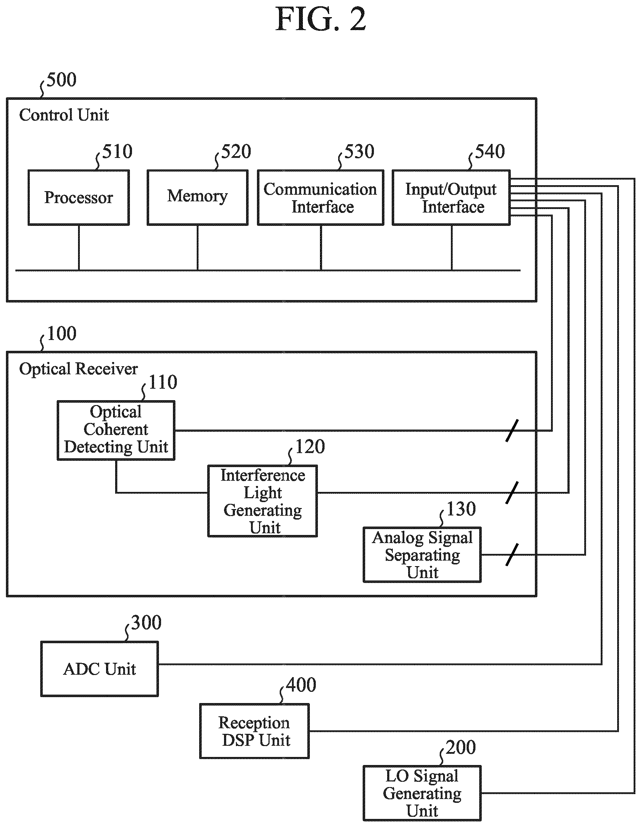

As illustrated in FIG. 2, the control unit 500 is an optical receiver control unit that controls the optical receiver 100, the LO signal generating unit 200, the ADC unit 300, and the reception DSP unit 400.

The control unit 500 includes a processor 510 such as a central processing unit (CPU) or a system large scale integration (LSI), a memory 520 including a random access memory (RAM), a read only memory (ROM), and the like, a communication interface 530, and an input/output interface 540.

The processor 510, the memory 520, the communication interface 530, and the input/output interface 540 are connected to a bus, and data, a control signal, and the like are exchanged with each other via the bus.

The processor 510 reads a program recorded in the memory 520 and executes processing based on the read program.

The memory 520 stores various data, a program for the optical receiver 100, the LO signal generating unit 200, the ADC unit 300, and the reception DSP unit 400 to execute processing, a processing program necessary for starting the system, and the like.

The communication interface 530 is used for transmission and reception of data and control signals between the optical receiving device and various components inside and outside the optical receiving device.

The input/output interface 540 is connected to the optical receiver 100, the LO signal generating unit 200, the ADC unit 300, and the reception DSP unit 400 via electrical wiring, and transmits and receives a control signal and modulation and demodulation signals. For example, it is an injection current to a light source for generating light for the interference light generating unit 120, and various control signals for the reception DSP unit 400.

Next, operation of the optical receiving device according to the first embodiment will be described.

When the optical coherent detecting unit 110 receives an optical signal in which a plurality of channels is frequency-multiplexed, the optical signal of each channel is polarization-multiplexed into an X-polarized wave and a Y-polarized wave by a digital coherent method, and each of the X-polarized wave and the Y-polarized wave is modulated into an I signal and a Q signal of orthogonal phases, the optical coherent detecting unit 110 causes the optical signal to interfere with the interference light having the single carrier frequency fc from the interference light generating unit 120, and outputs analog signals based on voltage obtained by photoelectrically converting optical signals obtained by the interference as four signals of the XI signal, the XQ signal, the YI signal, and the YQ signal.

The XI signal, the XQ signal, the YI signal, and the YQ signal are input to the XI analog signal separator 130XI, the XQ analog signal separator 130XQ, the YI analog signal separator 130YI, and the YQ analog signal separator 130YQ, respectively.

The XI signal input to the XI analog signal separator 130XI is branched into two signals of the XI signal on the low-band side and the XI signal on the high-band side by the splitter unit 131A, and the branched XI signal on the low-band side is input to the low-band side passing unit 131B, and the XI signal on the high-band side is input to the high-band side passing unit 131C.

The low-band side passing unit 131B passes the input XI signal on the low-band side through the frequency band on the low-band side, blocks the frequency band on the high-band side, and outputs the signal to the low-band side down-conversion unit 132 as the XI signal flowing to the low-band side lane.

The high-band side passing unit 131C passes the input XI signal on the high-band side through the frequency band on the high-band side, blocks the frequency band on the low-band side, and outputs the XI signal flowing to the high-band side lane to the high-band side down-conversion unit 133.

The low-band side down-conversion unit 132 multiplies the input XI signal having a signal component in the frequency band on the low-band side by the low-band LO signal from the LO signal generating unit 200, and outputs the XI-1 signal on the low-band side down-converted into a signal component in the frequency band equal to or lower than the set frequency to the ADC 300XI-1.

The high-band side down-conversion unit 133 multiplies the input XI signal having a signal component in the frequency band on the high-band side by the high-band LO signal from the LO signal generating unit 200, and outputs the XI-2 signal on the high-band side down-converted into a signal component in the frequency band equal to or lower than the set frequency to the ADC 300XI-2.

The XQ analog signal separator 130XQ operates similarly to the XI analog signal separator 130XI, outputs the XQ-1 signal on the low-band side obtained by down-converting the input XQ signal into a signal component in a frequency band equal to or lower than the set frequency to the ADC 300XQ-1, and outputs the XQ-2 signal on the high-band side to the ADC 300XQ-2.

The YI analog signal separator 130YI operates similarly to the XI analog signal separator 130XI, outputs the YI-1 signal on the low-band side obtained by down-converting the input YI signal into a signal component in a frequency band equal to or lower than the set frequency to the ADC 300YI-1, and outputs the YI-2 signal on the high-band side to the ADC 300YI-2.

The YQ analog signal separator 130YQ operates similarly to the XI analog signal separator 130XI, outputs the YQ-1 signal on the low-band side obtained by down-converting the input YQ signal into a signal component in a frequency band equal to or lower than the set frequency to the ADC 300YQ-1, and outputs the YQ-2 signal on the high-band side to the ADC 300YQ-2.

In the ADC unit 300, the input XI-1 signal, XI-2 signal, XQ-1 signal, XQ-2 signal, YI-1 signal, YI-2 signal, YQ-1 signal, and YQ-2 signal are subjected to analog-digital conversion processing by the respective ADCs 300, and output to the reception DSP unit 400.

The reception DSP unit 400 executes signal processing in the digital coherent method for IQ combining, frequency separation, and demodulation of the eight input digital signals in the digital domain, and outputs digital signals that have been restored to baseband signals corresponding to the plurality of channels frequency-multiplexed into the optical signal and demodulated.

Note that the optical receiving device according to the first embodiment described above is illustrated by targeting at an optical receiving device that receives an optical signal polarization-multiplexed into an X-polarized wave and a Y-polarized wave by the digital coherent method, but is also applicable to an optical signal of the digital coherent method for a single polarized wave using either the X-polarized wave or the Y-polarized wave.

In this case, the processing may be the same as the processing only for the X-polarized wave or the Y-polarized wave, the I signal and the Q signal are output from the optical coherent detecting unit 110, branched by the number of branches of 2 by the analog signal separating unit 130 for each of the I lane and the Q lane, and subjected to signal processing in the low-band side lane and the high-band side lane as in the optical receiving device illustrated in FIG. 1.

In addition, the optical receiving device according to the first embodiment described above has been mainly described for an optical receiving device that receives an optical signal in which M channels by M subcarriers of different frequencies are multiplexed, but it is also applicable to an optical receiving device that receives an optical signal obtained by dividing a large-capacity optical signal in one information source, that is, one channel into signals modulated by a plurality of subcarriers of different frequencies, and frequency-multiplexing the divided signals.

In this case, the optical receiving device according to the first embodiment assumes each of the signals modulated by a plurality of subcarriers of different frequencies as one channel, and assumes the optical signal in which the signals modulated by a plurality of subcarriers are frequency-multiplexed as an optical signal in which a plurality of channels is multiplexed and processes the optical signal.

That is, in the present disclosure, a lane for a signal modulated by each subcarrier obtained by dividing a large-capacity optical signal into a plurality of subcarriers of different frequencies is broadly interpreted as a channel.

As described above, in the optical receiving device according to the first embodiment, the analog electrical signal from the optical coherent detecting unit 110 obtained by causing the optical signal in which the plurality of channels is frequency-multiplexed to interfere with the single interference light from the interference light generating unit 120 is branched by the analog signal separating unit 130 by the number of branches of 2 in the frequency domain, and each analog signal branched in the frequency domain is output to the analog-digital converting unit 300 as an analog signal frequency-converted into a frequency equal to or lower than the set frequency. Thus, analog-digital conversion can be performed even on an optical signal having a signal component in a broadband frequency band without using an analog-digital converter which is required to be of a broadband and a high sampling rate as the analog-digital converting unit 300.

As a result, problems such as spurious due to interleaving in the analog-digital converting unit 300 do not occur, and distortion does not occur in the digital signal output from the analog-digital converting unit 300.

In the optical receiving device according to the first embodiment, an optical signal in which a plurality of channels is frequency-multiplexed, each channel is polarization-multiplexed into an X-polarized wave and a Y-polarized wave by the digital coherent method, and each of the X-polarized wave and the Y-polarized wave is modulated into an I signal and a Q signal of orthogonal phases is caused to interfere with the single interference light from the interference light generating unit 120 and coherently detected by the optical coherent detecting unit 110 to obtain four signals of the XI signal, the XQ signal, the YI signal, and the YQ signal formed by analog electrical signals, and the analog signal separating unit 130 separates the four signals into the XI-1 signal, the XQ-1 signal, the YI-1 signal, and the YQ-1 signal on the low-band side, and the XI-2 signal, the XQ-2 signal, the YI-2 signal, and the YQ-2 signal on the high-band side, which are down-converted into a signal component in a frequency band equal to or lower than the set frequency, and output them to the analog-digital converting unit 300. Thus, it is possible to perform analog-digital conversion on an optical signal having a signal component in the frequency band on the low-band side and a signal component in the frequency band on the high-band side without using an analog-digital converter that is required to be of a broadband and a high sampling rate as the analog-digital converting unit 300.

As a result, in the optical receiving device that receives the optical signal in which the band of receivable frequency is widened and the number of channels is increased, the analog-digital converting unit 300 that is required to be of a broadband and a high sampling rate is not used, problem such as spurious due to interleaving in the analog-digital converting unit 300 do not occur, and moreover, distortion does not occur in the digital signal output from the analog-digital converting unit 300.

### Second Embodiment.

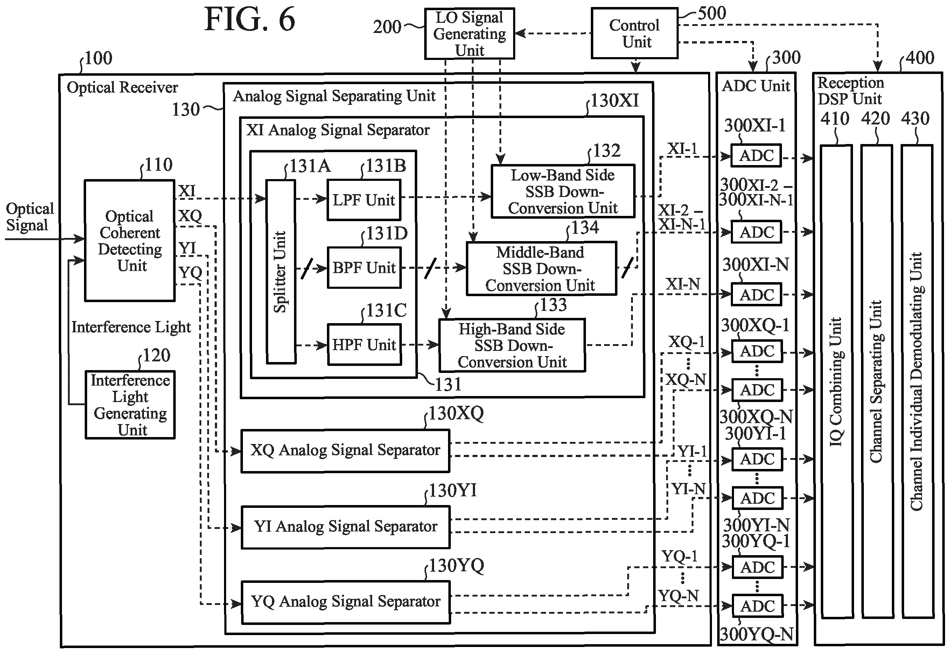

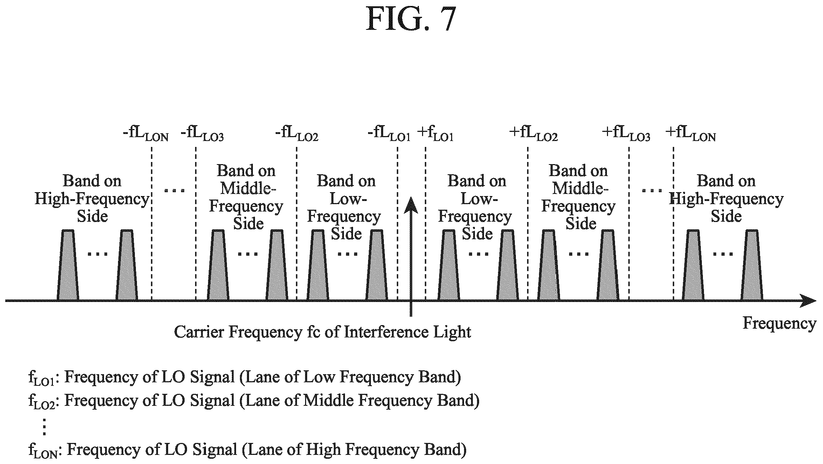

An optical receiving device according to a second embodiment will be described with reference to FIGS. 6 and 7.

While the number of branches on the frequency domain by the signal separating unit 131 of each analog signal separator 130 in the optical receiving device according to the first embodiment is 2, the optical receiving device according to the second embodiment is different in that the number of branches of N is 3 or more.

Even if a large number of channels are frequency-multiplexed into the optical signal and thereby the analog electrical signal output from the optical coherent detecting unit 110 becomes a very broadband signal, by increasing the number of branches of N and appropriately selecting the number of branches of N, it is possible to obtain an optical receiving device that does not need to use an analog-digital converter that is required to be of a broadband and a high sampling rate as the analog-digital converting unit 300.

Note that, in FIGS. 6 and 7, the same reference numerals as those attached in FIGS. 1 to 5 denote the same or corresponding parts.

Hereinafter, differences from the optical receiving device according to the first embodiment will be mainly described.

In the optical receiving device according to the second embodiment, each of the XI analog signal separator 130XI, the XQ analog signal separator 130XQ, the YI analog signal separator 130YI, and the YQ analog signal separator 130YQ constituting the analog signal separating unit 130 has the number of branches of N that is 3 or more, and includes one or more middle-band lanes through which an electrical signal of a signal component in a frequency band between a frequency band on the low-band side and a frequency band on the high-band side flows, in addition to a low-band side lane through which an electrical signal of a signal component in a frequency band on the low-band side flows and a high-band side lane through which an electrical signal of a signal component in a frequency band on the high-band side flows.

In a case where there are two or more middle-band lanes, the frequency bands of the signals flowing through the respective middle-band lanes are different frequency bands.

As illustrated in FIG. 7, the single carrier frequency fc of the interference light from the interference light generating unit 120 is set to a frequency to separate a signal component in the region of the positive frequency band and a signal component in the region of the negative frequency band with the frequency fc being centrosymmetric in each of the X-polarized wave and the Y-polarized wave, and moreover a frequency at which the signal component is converted into a sufficiently small frequency domain to be obtained as an effective output from the optical coherent detecting unit 110.

Both the region of the positive frequency band and the region of the negative frequency band are divided into N, and the N bands are a band on a low frequency side, (N - 2) bands on a middle frequency side, and a band on a high frequency side in order in a direction away from the single carrier frequency fc of the interference light.

The optical coherent detecting unit 110 causes the received optical signal to interfere with the interference light having the single carrier frequency fc from the interference light generating unit 120, and outputs analog signals based on voltage obtained by photoelectrically converting the optical signals obtained by the interference as four signals of an XI signal, an XQ signal, a YI signal, and a YQ signal.

The analog signal separating unit 130 includes an XI analog signal separator 130XI in the XI lane by the XI signal, an XQ analog signal separator 130XQ in the XQ lane by the XQ signal, a YI analog signal separator 130YI in the YI lane by the YI signal, and a YQ analog signal separator 130YQ in the YQ lane by the YQ signal.

Each analog signal separator 130 includes a signal separating unit 131, a low-band side down-conversion unit 132, a high-band side down-conversion unit 133, and a middle-band side down-conversion unit 134.

The analog signal separators have substantially the same operation and function and perform similar analog processing, and thus the difference from the XI analog signal separator 130XI in the first embodiment will be mainly described below as a representative of the XI analog signal separator 130XI.

The signal separating unit 131 branches by the number of branches of N (N is a natural number of 3 or more) in the frequency domain, and separates the signal into a signal component in a low frequency band, a signal component in a high frequency band, and a signal component in a middle frequency band between the low frequency band and the high frequency band.

That is, around the frequency fc of the interference light from the interference light generating unit 120, a frequency band closest to the frequency fc is defined as a low frequency band, a frequency band farthest from the frequency fc is defined as a high frequency band, and a frequency band therebetween is defined as a middle frequency band.

The signal separating unit 131 outputs a signal component in a low frequency band as a low-band XI signal, a signal component in a high frequency band as a high-band XI signal, and a signal component in a middle frequency band as a middle-band XI signal.

The number of middle frequency bands is not limited to one, the number of branches of N is appropriately selected depending on the number of channels frequency-multiplexed into an optical signal, and the middle frequency bands are set as N - 2 middle frequency bands depending on the number of branches of N.

The signal separating unit 131 includes a splitter unit 131A, a low-band side passing unit 131B, a high-band side passing unit 131C, and a middle-band passing unit 131D.

As illustrated in FIG. 7, to the splitter unit 131A, the XI signal for a plurality of frequency-multiplexed channels is input, and the splitter unit branches the input XI signal into N analog electrical signals by the number of branches of N.

The N analog electrical signals are classified into one low-band side analog electrical signal, one high-band side analog electrical signal, and (N - 2) middle-band side analog electrical signals located on a middle-band side between the low-band side and the high-band side in the frequency domain, and for convenience, the low-band side analog electrical signal is referred to as a low-band XI signal, the high-band side analog electrical signal is referred to as a high-band XI signal, and the (N - 2) middle-band side analog electrical signals are referred to as middle-band XI signals.

The low-band side passing unit 131B is a low-pass filter (LPF) to which the low-band XI signal branched by the splitter unit 131A is input, and which passes a low frequency band and blocks other high frequency bands.

The high-band side passing unit 131C is a high-pass filter (HPF) to which the high-band XI signal branched by the splitter unit 131A is input, and which passes a high frequency band and blocks other low frequency bands.

There are (N - 2) middle-band passing units 131D with respect to the number of branches of N, and each middle-band passing unit 131D is a band-pass filter (BPF) to which the middle-band XI signal branched by the splitter unit 131A is input, and which passes a middle frequency band selected depending on the number of branches and blocks the other low and high frequency bands.

In a case where a plurality of middle-band passing units 131D is provided, the BPFs have different frequency pass bands.

In order to avoid complication of the description, the (N - 2) middle-band passing units will be collectively described as the middle-band passing units 131D below.

Note that the signal separating unit 131 may include a frequency selecting switch.

The low-band side down-conversion unit 132 down-converts the low-band XI signal from the low-band side passing unit 131B into a signal component in a frequency band equal to or lower than a set frequency, and outputs it as a low-band XI-1 signal.

The low-band side down-conversion unit 132 performs down-conversion by multiplication by a low-band LO signal from the LO signal generating unit 200.

As illustrated in FIG. 7, the frequency of the low-band LO signal from the LO signal generating unit 200 is set to the absolute value f_{LO1} of the frequency on the lower side not including a signal component of the positive low-band XI signal and a signal component of the negative low-band XI signal in the low frequency band in the XI signal flowing in the XI-1 lane.

Note that, as illustrated in FIG. 7, the low-band XI-1 signal includes signal components in frequency bands for a plurality of channels in both the positive low band and the negative low band. Of course, both the positive low band and the negative low band may be only signal components in a frequency band corresponding to one channel.

The high-band side down-conversion unit 133 down-converts the high-band XI signal from the high-band side passing unit 131C into a signal component in a frequency band equal to or lower than the set frequency, and outputs a high-band XI-N signal.

The high-band side down-conversion unit 133 performs down-conversion by multiplication by a high-band LO signal from the LO signal generating unit 200.

As illustrated in FIG. 7, the frequency of the high-band LO signal from the LO signal generating unit 200 is set to the absolute value f_{LON} of the frequency on the lower side not including the signal component of the positive high-band XI signal and the signal component of the negative high-band XI signal in the high frequency band in the XI signal flowing in the XI-N lane.

Note that, as illustrated in FIG. 7, the high-band XI-N signal includes signal components in frequency bands for a plurality of channels in both the positive high band and the negative high band. Of course, both the positive high band and the negative high band may be only signal components in a frequency band corresponding to one channel.

The middle-band side down-conversion unit 134 down-converts the middle-band XI signal from the middle-band passing unit 131D into a signal component in a frequency band equal to or lower than the set frequency, and outputs it as a middle-band XI-2 signal to XI-(N - 1) signal.

The middle-band side down-conversion unit 134 performs down-conversion by multiplication by a middle-band LO signal from the LO signal generating unit 200.

As illustrated in FIG. 7, the frequency of the middle-band LO signal from the LO signal generating unit 200 is set from the absolute value f_{LO2} to the absolute value f_{LON-1} of the frequency on the lower side not including the signal component of the positive middle-band XI signal and the signal component of the negative middle-band XI signal in each of frequency bands in the XI signals flowing in the XI-2 lane to XI-(N - 1) lane.

Note that each of the middle-band XI-2 signal to XI-(N - 1) signal includes signal components in frequency bands for a plurality of channels, as illustrated in FIG. 7. Of course, only the signal component in the frequency band for one channel may be used.

The ADC unit 300 is an aggregate of (4 × N) ADCs including the ADC 300XI-1 to the ADC 300XI-N, the ADC 300XQ-1 to the ADC 300XQ-N, the ADC 300YI-1 to the ADC 300YI-N, and the ADC 300YQ-1 to the ADC 300YQ-N, which correspond to the XI-1 lane to the XI-N lane of the XI signal, the XQ-1 lane to the XQ-N lane of the XQ signal, the YI-1 lane to the YI-N lane of the YI signal, and the YQ-1 lane to the YQ-N lane of the YQ signal, respectively.

Each ADC 300 samples the electrical signal in the analog domain down-converted to a frequency equal to or lower than the set frequency by the corresponding lane, and converts the electrical signal into a digital signal which is a discrete signal in the digital domain.

That is, the ADC unit 300 includes an input terminal and an ADC independently for each of the (4 × N) lanes, performs conversion processing from an analog signal to a digital signal in parallel, and outputs the digital signals XI-1 to XI-N, XQ-1 to XQ-N, YI-1 to YI-N, and YQ-1 to YQ-2 converted into digital signals from (4 × N) output terminals.

The reception DSP unit 400 includes an IQ combining unit 410, a channel separating unit 420, and a channel individual demodulating unit 430, receives inputs of the digital signals XI-1 to XI-N, XQ-1 to XQ-N, YI-1 to YI-N, and YQ-1 to YQ-2 from the ADC unit 300, and frequency-separates the frequency-multiplexed electrical signals in each of the X-polarized wave and the Y-polarized wave in the digital domain, and performs a series of digital signal processes on the frequency-separated signals in the digital domain, thereby compensating and demodulating wavelength dispersion and rotation of polarized waves generated during transmission by an optical fiber or the like from the optical transmitting device to the optical receiving device, phase rotation due to a frequency error between the received optical signal in the optical coherent detecting unit 110 and the interference light from the interference light generating unit 120, and the like, similarly to the reception DSP unit 400 in the first embodiment.

Next, operation of the optical receiving device according to the second embodiment will be described.

When the optical coherent detecting unit 110 receives an optical signal in which a plurality of channels is frequency-multiplexed, the optical signal of each channel is polarization-multiplexed into an X-polarized wave and a Y-polarized wave by the digital coherent method, and each of the X-polarized wave and the Y-polarized wave is modulated into an I signal and a Q signal of orthogonal phases, the optical coherent detecting unit 110 causes the optical signal to interfere with the interference light having the single carrier frequency fc from the interference light generating unit 120, and outputs analog signals based on voltage obtained by photoelectrically converting optical signals obtained by the interference as four signals of the XI signal, the XQ signal, the YI signal, and the YQ signal.

The XI signal, the XQ signal, the YI signal, and the YQ signal are input to the XI analog signal separator 130XI, the XQ analog signal separator 130XQ, the YI analog signal separator 130YI, and the YQ analog signal separator 130YQ, respectively.

The XI signal input to the XI analog signal separator 130XI is branched by the splitter unit 131A into N signals of the XI signal on the low-band side, the XI signal on the high-band side, and the (N - 2) middle-band XI signals, and the branched XI signal on the low-band side is input to the low-band side passing unit 131B, the XI signal on the high-band side is input to the high-band side passing unit 131C, and the (N - 2) middle-band XI signals are input to the middle-band passing units 131D.

The low-band side passing unit 131B allows the input low-band XI signal to pass through the lowest frequency band, blocks other frequency bands, and outputs the signal as the XI signal flowing in the X - 1 lane to the low-band side down-conversion unit 132.

The high-band side passing unit 131C allows the input high-band XI signal to pass through the highest frequency band, blocks the other frequency bands, and outputs the signal as the XI signal flowing in the X-N lane to the high-band side down-conversion unit 133.

Each of the middle-band passing units 131D provided depending on the number of branches of N allows the input middle-band XI signal to pass through a frequency band of a selected pass band, blocks other frequency bands, and outputs the signal as the XI signal flowing in the corresponding one of the X - 2 lane to the X-(N - 1) lane to the middle-band side down-conversion unit 134.

The low-band side down-conversion unit 132 multiplies the input XI signal having the signal component in the low frequency band by the low-band LO signal from the LO signal generating unit 200, and outputs the low-band XI-1 signal down-converted into the signal component in the frequency band equal to or lower than the set frequency to the ADC 300XI-1.

The high-band side down-conversion unit 133 multiplies the input XI signal having the signal component in the high frequency band by the high-band LO signal from the LO signal generating unit 200, and outputs the high-band XI-N signal down-converted into the signal component in the frequency band equal to or lower than the set frequency to the ADC 300XI-N.

The middle-band side down-conversion unit 134 multiplies the input XI signal having the signal component in the middle frequency band by the middle-band LO signal from the LO signal generating unit 200, and outputs the middle-band XI-2 signal to XI-(N - 1) signal down-converted into the signal component in the frequency band equal to or lower than the set frequency to the ADC 300XI-2 to ADC 300XI-(N - 1).

The XQ analog signal separator 130XQ operates similarly to the XI analog signal separator 130XI, outputs the low-band XQ-1 signal obtained by down-converting the input XQ signal into a signal component in a frequency band equal to or lower than the set frequency to the ADC 300XQ-1, outputs the high-band XQ-N signal to the ADC 300XQ-N, and outputs the middle-band XQ-1 signal to XQ-(N - 1) signal to the ADC 300XQ-2 to ADC 300XQ-(N - 1).

The YI analog signal separator 130YI operates similarly to the XI analog signal separator 130XI, outputs the low-band YI-1 signal obtained by down-converting the input YI signal into a signal component in a frequency band equal to or lower than the set frequency to the ADC 300YI-1, outputs the high-band YI-N signal to the ADC 300YI-N, and outputs the middle-band YI-1 signal to YI-(N - 1) signal to the ADC 300YI-2 to ADC 300YI-(N - 1).

The YQ analog signal separator 130YQ operates similarly to the XI analog signal separator 130XI, outputs the low-band YQ-1 signal obtained by down-converting the input YQ signal into a signal component in a frequency band equal to or lower than the set frequency to the ADC 300YQ-1, outputs the high-band YQ-N signal to the ADC 300YQ-N, and outputs the middle-band YQ-1 signal to YQ-(N - 1) signal to the ADC 300YQ-2 to ADC 300YQ-(N - 1).

In the ADC unit 300, the input XI-1 signal to XI-N signal, XQ-1 signal to XQ-N signal, YI-1 signal to YI-N signal, and YQ-1 signal to YQ-N signal are subjected to analog-digital conversion processing by respective ADCs 300, and output to the reception DSP unit 400.

The reception DSP unit 400 performs signal processing in the digital coherent method for IQ combining, frequency separation, and demodulation on the input (4 × N) digital signals in the digital domain, and outputs digital signals that have been restored to baseband signals corresponding to a plurality of channels frequency-multiplexed into the optical signal and demodulated.

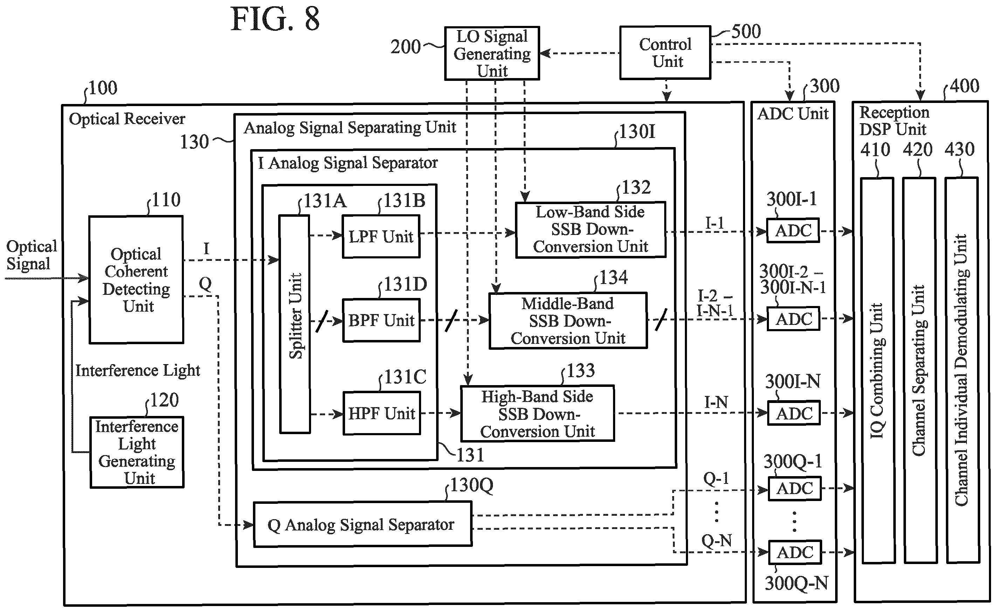

Note that the optical receiving device according to the second embodiment described above is illustrated by targeting at an optical receiving device that receives an optical signal polarization-multiplexed into an X-polarized wave and a Y-polarized wave by the digital coherent method, but is also applicable to an optical signal of the digital coherent method for a single polarized wave using either the X-polarized wave or the Y-polarized wave, as illustrated in FIG. 8.

In this case, as illustrated in FIG. 8, the processing may be the same as the processing only for the X-polarized wave or the Y-polarized wave, the I signal and the Q signal are output from the optical coherent detecting unit 110, branched by the number of branches of N by the analog signal separating unit 130 for each of the I lane and the Q lane, and subjected to signal processing in the low-band lane, the high-band lane, and the middle-band lane as in the optical receiving device illustrated in FIG. 6.

Further, as in the optical receiving device according to the first embodiment, the optical receiving device according to the second embodiment described above is also applicable to an optical receiving device that receives an optical signal obtained by dividing a large-capacity optical signal in one information source, that is, one channel into signals modulated by a plurality of subcarriers of different frequencies, and frequency-multiplexing the divided signals.

As described above, in the optical receiving device according to the second embodiment, the analog electrical signal from the optical coherent detecting unit 110 obtained by causing the optical signal in which the plurality of channels is frequency-multiplexed to interfere with the single interference light from the interference light generating unit 120 is branched by the analog signal separating unit 130 by the number of branches of N (a natural number of 3 or more) in the frequency domain, and each analog signal branched in the frequency domain is output to the analog-digital converting unit 300 as an analog signal frequency-converted into a frequency equal to or lower than the set frequency. Thus, even for an optical signal in which many channels are frequency-multiplexed, analog-digital conversion can be performed for an optical signal having a signal component in a broadband frequency band without using an analog-digital converter which is required to be of a broadband and a high sampling rate as the analog-digital converting unit 300.

As a result, problems such as spurious due to interleaving in the analog-digital converting unit 300 do not occur, and distortion does not occur in the digital signal output from the analog-digital converting unit 300.

In the optical receiving device according to the second embodiment, an optical signal in which a plurality of channels is frequency-multiplexed, each of the channels is polarization-multiplexed into an X-polarized wave and a Y-polarized wave by the digital coherent method, and each of the X-polarized wave and the Y-polarized wave is modulated into an I signal and a Q signal of orthogonal phases is caused to interfere with single interference light from the interference light generating unit 120 and coherently detected by the optical coherent detecting unit 110 to obtain four signals of the XI signal, the XQ signal, the YI signal, and the YQ signal formed by analog electrical signals, the analog signal separating unit 130 branches each of the four signals by the number of branches of N (natural number of 3 or more) in a frequency domain, and the analog signals branched in the frequency domain are separated into the low-band XI-1 signal, XQ-1 signal, YI-1 signal, and YQ-1 signal, the high-band XI-N signal, XQ-N signal, YI-N signal, and YQ-N signal, and the middle-band XI-2 signal to XI-(N - 1) signal, XQ-2 signal to XQ-(N - 1) signal, YI-2 signal to YI-(N - 1) signal, and YQ-2 signal to YQ-(N - 2) signal which have been down-converted into signal components in a frequency band equal to or lower than the set frequency, and the separated signals are output to the analog-digital converting unit 300. Thus, even for an optical signal in which many channels are frequency-multiplexed, analog-digital conversion can be performed even for an optical signal having a signal component in the frequency band on the low-band side and a signal component in the frequency band on the high-band side without using an analog-digital converter that is required to be of a broadband and a high sampling rate as the analog-digital converting unit 300.

As a result, in the optical receiving device that receives the optical signal in which the band of receivable frequency is widened and the number of channels is increased, the analog-digital converting unit 300 that is required to be of a broadband and a high sampling rate is not used, problem such as spurious due to interleaving in the analog-digital converting unit 300 do not occur, and moreover, distortion does not occur in the digital signal output from the analog-digital converting unit 300.

### Third Embodiment.

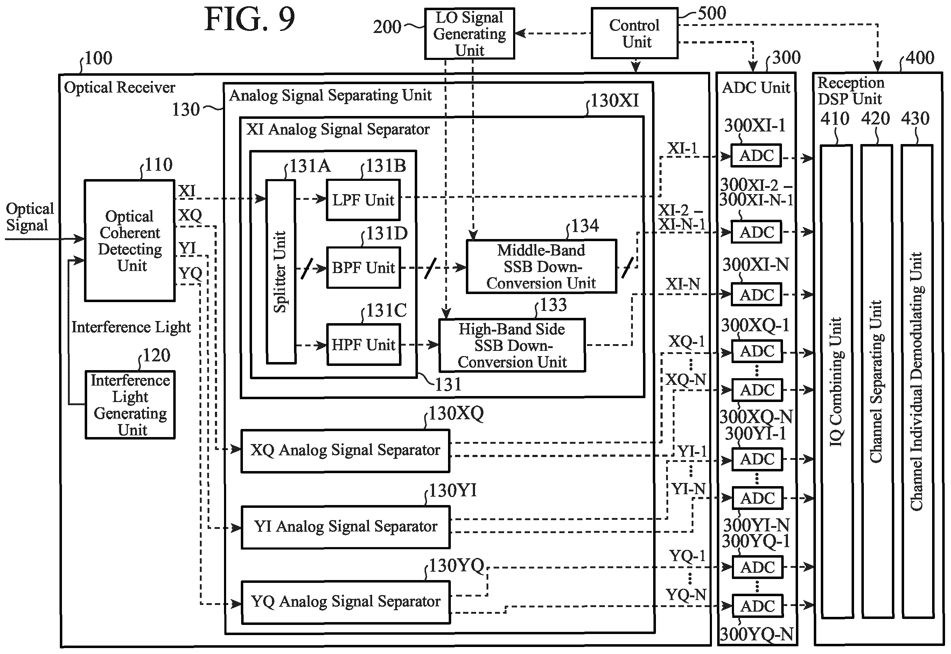

An optical receiving device according to a third embodiment will be described with reference to FIGS. 9 to 11.

While the optical receiving device according to the second embodiment is intended for those in which the number of channels frequency-multiplexed in an optical signal is an even number, the optical receiving device according to the third embodiment is different in that it is intended for those in which the number of channels frequency-multiplexed in an optical signal is an odd number (a natural number excluding one).

The optical signal received by the optical receiving device according to the third embodiment assumes, as an example, an optical receiving device that receives an optical signal in which odd (natural number excluding 1, M) channels by odd (natural number excluding 1) subcarriers of different frequencies in the X-polarized wave and M channels of odd (natural number excluding 1) channels by odd (natural number excluding 1, M) subcarriers of different frequencies in the Y-polarized wave are frequency-multiplexed.

In general, when X-polarized waves of M channels and Y-polarized waves of M channels are multiplexed, they are regarded as M channels.

However, the X-polarized waves of the M channels and the Y-polarized waves of the M channels can be regarded as independent signals, and can be regarded as a total of 2M channels.

Note that, in FIGS. 9 to 11, the same reference numerals as those attached in FIGS. 1 to 8 denote the same or corresponding parts.

Hereinafter, differences from the optical receiving device according to the second embodiment will be mainly described.

The single carrier frequency fc of the interference light from the interference light generating unit 120 is set to the frequency of the subcarrier of the channel located at the center of the odd number of channels in the optical signal in the frequency domain in each of the X-polarized wave and the Y-polarized wave.

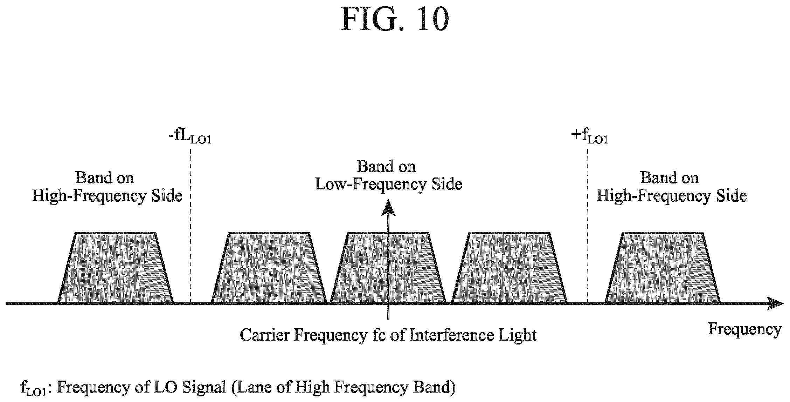

For example, in the case of five channels, as illustrated in FIG. 10, the frequency fc is set to the frequency of the subcarrier of the third channel to be centrosymmetric, thereby separating a signal component in the region of the positive frequency band and a signal component in the region of the negative frequency band.

In the region of the positive frequency band and the region of the negative frequency band including the third channel located at the center, the side close to the single carrier frequency fc of the interference light, that is, the second to fourth channels are bands on the low-frequency side, and the side distant therefrom, that is, the first and fifth channels are bands on the high-frequency side.

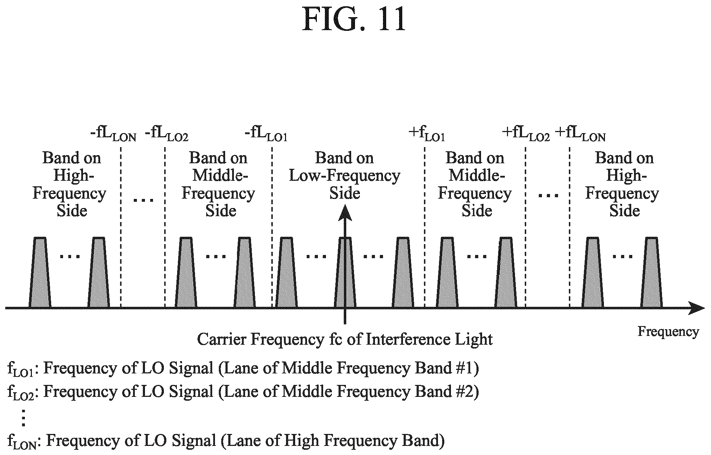

Further, in a case of the M channels in which the number of channels is an odd number of 5 or more, as illustrated in FIG. 11, the frequency fc is set to the frequency of the subcarrier of the channel located at the center of the M channels in the frequency domain to be centrosymmetric, thereby separating the signal component in the region of the positive frequency band and the signal component in the region of the negative frequency band.

Both the region of the positive frequency band and the region of the negative frequency band are divided into N (N is a natural number of 3 or more) except for the region of the frequency band in which the channel located at the center is set, and the frequency band on the side closest to the single carrier frequency fc of the interference light in the region of the positive frequency band and the region of the negative frequency band including the channel located at the center is set as the band on the low-frequency side, and the (N - 2) bands on the middle frequency side and the band on the high-frequency side are set in order in the direction away from the single carrier frequency fc of the interference light.

The optical coherent detecting unit 110 causes the received optical signal to interfere with the interference light having the single carrier frequency fc from the interference light generating unit 120, and outputs analog signals based on voltage obtained by photoelectrically converting optical signals obtained by the interference as four signals of an XI signal, an XQ signal, a YI signal, and a YQ signal.

The analog signal separating unit 130 includes an XI analog signal separator 130XI in the XI lane by the XI signal, an XQ analog signal separator 130XQ in the XQ lane by the XQ signal, a YI analog signal separator 130YI in the YI lane by the YI signal, and a YQ analog signal separator 130YQ in the YQ lane by the YQ signal.

Each analog signal separator 130 includes a signal separating unit 131, a high-band side down-conversion unit 133, and a middle-band side down-conversion unit 134.

The analog signal separators 130 each have substantially the same operation and function and perform similar analog processing, and thus the difference from the XI analog signal separator 130XI in the second embodiment will be mainly described below as a representative of the XI analog signal separator 130XI.

Each analog signal separator 130 in the third embodiment is different from each analog signal separator 130 in the second embodiment in that the analog signal separator does not include the low-band side down-conversion unit 132.

That is, in the third embodiment, the signal component in the band on the low-frequency side in the XI signal output from the optical coherent detecting unit 110 is a signal obtained by optical interference due to the frequency of the subcarrier of the channel located at the center of the odd number of channels in the optical signal in the frequency domain, and thus it is not necessary to perform down-conversion by the low-band side down-conversion unit 132.

Therefore, the low-band XI signal separated into the signal components in the low frequency band by the signal separating unit 131 is output to the ADC unit 300 as an XI-1 signal.

Note that, in a case where the number of channels frequency-multiplexed in the optical signal is illustrated in FIG. 10, the low-band XI-1 signal includes a signal component in a frequency band of a channel located at the center and signal components in frequency bands of channels located on both sides of the center.

Further, in a case where the number of channels frequency-multiplexed in the optical signal is illustrated in FIG. 11, the low-band XI-1 signal includes a signal component in a frequency band of a channel located at the center and signal components in frequency bands of a plurality of channels in both the positive low band and the negative low band.

The high-band XI signal separated into signal components in the high frequency band by the signal separating unit 131 is down-converted into signal components in a frequency band equal to or lower than a set frequency by the high-band side down-conversion unit 133, and is output to the ADC unit 300 as a high-band XI-N signal.

Note that, in a case where the number of channels frequency-multiplexed in the optical signal is illustrated in FIG. 10, the high-band XI-N signal includes signal components in a frequency band for one channel in both the positive high band and the negative high band.

Further, in a case where the number of channels frequency-multiplexed in the optical signal is illustrated in FIG. 11, the high-band XI-N signal includes signal components in frequency bands for a plurality of channels in both the positive high band and the negative high band.

The middle-band XI signal separated into the signal components in the middle frequency band by the signal separating unit 131 is down-converted into a signal component in a frequency band equal to or lower than the set frequency by the middle-band side down-conversion unit 134, and is output to the ADC unit 300 as a middle-band XI-2 signal to XI-(N - 1) signal.

Note that, in a case where the number of channels frequency-multiplexed in the optical signal is illustrated in FIG. 10, the middle-band lane is not necessary.

Further, in a case where the number of channels frequency-multiplexed in the optical signal is illustrated in FIG. 11, each of the middle-band XI-2 signal to XI-(N - 1) signal includes signal components in frequency bands for a plurality of channels in both the positive high band and the negative high band.

The signal processing by the high-band lane and the middle-band lane in the analog signal separator 130 is signal processing similar to the signal processing by the high-band lane and the middle-band lane in the analog signal separator 130 in the second embodiment, and thus, detailed description thereof is omitted.

Further, the signal processing by the ADC unit 300 and the reception DSP unit 400 is signal processing similar to the signal processing by the ADC unit 300 and the reception DSP unit 400 in the second embodiment, and thus detailed description thereof is omitted.

Next, operation of the optical receiving device according to the third embodiment will be described.

The operation of the optical receiving device according to the third embodiment is similar to the operation of the optical receiving device according to the second embodiment.

Since the carrier frequency fc of the interference light from the interference light generating unit 120 is set to the frequency of the subcarrier of the channel located at the center of the odd number of channels in the optical signal in the frequency domain, only the difference is that each analog signal separator 130 does not include the low-band side down-conversion unit 132 with respect to each analog signal separator 130 in the second embodiment, and the operation of the optical receiving device is basically the same.

Note that the optical receiving device according to the third embodiment described above is illustrated by targeting at an optical receiving device that receives an optical signal polarization-multiplexed into an X-polarized wave and a Y-polarized wave by the digital coherent method, but is also applicable to an optical signal of the digital coherent method for a single polarized wave using either the X-polarized wave or the Y-polarized wave.

In this case, the processing may be the same as the processing only for the X-polarized wave or the Y-polarized wave, the I signal and the Q signal are output from the optical coherent detecting unit 110, branched by the number of branches of N by the analog signal separating unit 130 for each of the I lane and the Q lane, and subjected to signal processing in the low-band side lane, the high-band side lane, and the middle-band lane as in the optical receiving device illustrated in FIG. 9.

In addition, the optical receiving device according to the above-described third embodiment is directed to an optical signal in which the number of channels frequency-multiplexed into the optical signal is an odd number (a natural number excluding one), but may be directed to an optical signal in which the number of channels frequency-multiplexed into the optical signal is an even number.

In this case, the single carrier frequency fc of the interference light from the interference light generating unit 120 is set to the frequency of one subcarrier of two channels located at the center of the plurality of channels in the optical signal in the frequency domain in each of the X-polarized wave and the Y-polarized wave.

It is sufficient if the optical coherent detecting unit 110 performs coherent detection to obtain an analog electrical signal separated into a signal component in the region of the positive frequency band and a signal component in the region of the negative frequency band with the carrier frequency fc as centrosymmetric, and the analog signal separating unit 130 branches the analog electrical signal into two or N to perform signal processing similar to the processing described above.

Furthermore, as in the optical receiving device according to the second embodiment, the optical receiving device according to the third embodiment described above is also applicable to an optical receiving device that receives an optical signal obtained by dividing a large-capacity optical signal in one information source, that is, one channel into signals modulated by a plurality of subcarriers of different frequencies, and frequency-multiplexing the divided signals.

As described above, the optical receiving device according to the third embodiment has effects similar to those of the optical receiving device according to the second embodiment, and the low-band side down-conversion unit can be omitted in the analog signal separator 130.

Note that free combinations of the embodiments, modifications of any component of each embodiment, or omissions of any component in each embodiment are possible.

### INDUSTRIAL APPLICABILITY

The optical receiving device according to the present disclosure can be applied to an optical receiving device used in a digital coherent technology field widely applied in a metro core network and a submarine optical cable system in optical fiber communication, an optical receiving device used in a wireless access network in a wireless communication field, and an optical receiving device used in an optical network including a core metro used for an encryption signal, a video system, an existing Internet protocol, and the like.

### REFERENCE SIGNS LIST

100: optical receiver, 110: optical coherent detecting unit, 120: interference light generating unit, 130: analog signal separating unit, 131: signal separating unit, 132: low-band side down-conversion unit, 133: high-band side down-conversion unit, 134: middle-band side down-conversion unit, 200: LO signal generating unit, 300: ADC unit, 400: reception DSP unit, 410: IQ combining unit, 420: channel separating unit, 430: channel individual demodulating unit, 500: control unit

## Claims

1. An optical receiving device comprising:
an optical coherent detecting unit (110);
an analog signal separating unit (130);
an analog-digital converting unit (300) which does not process an optical signal in which a plurality of channels is frequency-multiplexed with high bandwidth and at a high sampling rate;
a channel separating unit (420); and
a channel individual demodulating unit (430), wherein
the optical coherent detecting unit causes the optical signal in which the plurality of channels is frequency-multiplexed to interfere with single interference light and performs coherent detection, and outputs an analog electrical signal,
the analog signal separating unit branches the analog electrical signal from the optical coherent detecting unit by the number of branches of N (N is a natural number of 2 or more) in a frequency domain, and outputs analog electrical signals branched in the frequency domain as respective analog electrical signals each of which is frequency-converted into a frequency equal to or lower than a set frequency, the set frequency being set on a basis of a frequency domain in which the analog-digital converting unit can perform analog-digital conversion,
the analog-digital converting unit performs the analog-digital conversion on each of the analog electrical signals branched by the analog signal separating unit and converted into the frequency equal to or lower than the set frequency, and outputs resultant signals as digital signals,
the channel separating unit performs frequency conversion on the digital signals output from the analog-digital converting unit in a digital domain, returns the digital signals to baseband signals, and frequency-separates the baseband signals, corresponding to the plurality of channels, and
the channel individual demodulating unit demodulates each of the signals frequency-separated by the channel separating unit to obtain a digital signal of a corresponding one of the plurality of channels.

2. The optical receiving device according to claim 1, wherein a frequency (fc) of the interference light is a frequency to separate a signal component in a band on a low-frequency (f_{LO1}) side and a signal component in a band on a high-frequency (f_{LO2}) side of frequencies of the plurality of channels frequency-multiplexed in the optical signal with the frequency (fc) of the interference light in a centrosymmetric manner.

3. The optical receiving device according to claim 2, wherein
the analog signal separating unit includes a signal separating unit (131) and a down-conversion unit,
the signal separating unit includes
a splitter unit (131A) to split the analog electrical signal from the optical coherent detecting unit into two analog electrical signals by the number of branches of 2 in the frequency domain,
a low-band side passing unit (131B) to pass a frequency band on a low-band side and block a frequency band on a high-band side in one of the analog electrical signals from the splitter unit, and
a high-band side passing unit (131C) to pass a frequency band on a high-band side and block a frequency band on a low-band side in the other of the analog electrical signals from the splitter unit, and
the down-conversion unit includes
a low-band side down-conversion unit (132) to output an analog electrical signal on the low-band side from the low-band side passing unit to the analog-digital converting unit as an analog electrical signal frequency-converted into a frequency equal to or lower than the set frequency, and
a high-band side down-conversion unit (133) to output an analog electrical signal on the high-band side from the high-band side passing unit to the analog-digital converting unit as an analog electrical signal frequency-converted into a frequency equal to or lower than the set frequency.

4. The optical receiving device according to claim 2, wherein
the analog signal separating unit includes a signal separating unit (131) and a down-conversion unit,
the signal separating unit includes
a splitter unit (131A) to split the analog electrical signal from the optical coherent detecting unit into N analog electrical signals of a low-band side analog electrical signal, a high-band side analog electrical signal, and (N - 2) middle-band side analog electrical signals by the number of branches of N in the frequency domain,
a low-band side passing unit (131B) to pass a frequency band on a low-band side and block a frequency band on a high-band side in the low-band side analog electrical signal from the splitter unit,
a high-band side passing unit (131C) to pass a frequency band on a high-band side and block a frequency band on a low-band side in the high-band side analog electrical signal from the splitter unit, and
a middle-band side passing unit (131D) to pass a frequency band on a middle-band side between a frequency band on a high-band side and a frequency band on a low-band side and block a frequency band other than the frequency band on the middle-band side in the middle-band side analog electrical signal from the splitter unit, and
the down-conversion unit includes
a low-band side down-conversion unit (132) to output an analog electrical signal on the low-band side from the low-band side passing unit to the analog-digital converting unit as an analog electrical signal frequency-converted into a frequency equal to or lower than the set frequency,
a high-band side down-conversion unit (133) to output an analog electrical signal on the high-band side from the high-band side passing unit to the analog-digital converting unit as an analog electrical signal frequency-converted into a frequency equal to or lower than the set frequency, and
a middle-band side down-conversion unit (134) to output an analog electrical signal on the middle-band side from the middle-band side passing unit to the analog-digital converting unit as an analog electrical signal frequency-converted into a frequency equal to or lower than the set frequency.

5. The optical receiving device according to claim 1, wherein
the number of the channels in the optical signal is an odd number (a natural number excluding 1), and
a frequency of the interference light is a frequency of a carrier of a channel located at a center of the plurality of channels in the frequency domain.

6. The optical receiving device according to claim 5, wherein
the analog signal separating unit includes a signal separating unit (131) and a down-conversion unit,
the signal separating unit includes
a splitter unit (131A) to split the analog electrical signal from the optical coherent detecting unit into two analog electrical signals by the number of branches of 2 in the frequency domain,
a low-band side passing unit (131B) to output an analog electrical signal obtained by passing a frequency band on a low-band side and blocking a frequency band on a high-band side in one of the analog electrical signals from the splitter unit to the analog-digital converting unit, and
a high-band side passing unit (131C) to pass a frequency band on a high-band side and block a frequency band on a low-band side in the other of the analog electrical signals from the splitter unit, and
the down-conversion unit includes
a high-band side down-conversion unit (133) to output an analog electrical signal on the high-band side from the high-band side passing unit to the analog-digital converting unit as an analog electrical signal frequency-converted into a frequency equal to or lower than the set frequency.

7. The optical receiving device according to claim 5, wherein
the analog signal separating unit includes a signal separating unit (131) and a down-conversion unit,
the signal separating unit includes
a splitter unit (131A) to split the analog electrical signal from the optical coherent detecting unit into N analog electrical signals of a low-band side analog electrical signal, a high-band side analog electrical signal, and (N - 2) middle-band side analog electrical signals by the number of branches of N in the frequency domain,
a low-band side passing unit (131B) to output an analog electrical signal obtained by passing a frequency band on a low-band side and blocking a frequency band on a high-band side in the low-band side analog electrical signal from the splitter unit to the analog-digital converting unit,
a high-band side passing unit (131C) to pass a frequency band on a high-band side and block a frequency band on a low-band side in the high-bandside analog electrical signal from the splitter unit, and
a middle-band side passing unit (131D) to pass a frequency band on a middle-band side between a frequency band on a high-band side and a frequency band on a low-band side and block a frequency band other than the frequency band on the middle-band side in the middle-band side analog electrical signal from the splitter unit, and
the down-conversion unit includes
a high-band side down-conversion unit (133) to output an analog electrical signal on the high-band side from the high-band side passing unit to the analog-digital converting unit as an analog electrical signal frequency-converted into a frequency equal to or lower than the set frequency, and
a middle-band side down-conversion unit (134) to output an analog electrical signal on the middle-band side from the middle-band side passing unit to the analog-digital converting unit as an analog electrical signal frequency-converted into a frequency equal to or lower than the set frequency.

8. The optical receiving device according to any one of claims 1 to 7, wherein each of the channels in the optical signal comprises an optical signal modulated into an I signal and a Q signal of orthogonal phases.

9. The optical receiving device according to any one of claims 1 to 7, wherein each of the channels in the optical signal comprises an optical signal that is polarization-multiplexed and modulated into an I signal and a Q signal of orthogonal phases.

10. An optical receiving device comprising:
an optical coherent detecting unit (110);
an analog signal separating unit (130);
an analog-digital converting unit (300) which does not process an optical signal with high bandwidth and at a high sampling rate;
an IQ combining unit (410);
a channel separating unit (420); and
a channel individual demodulating unit (430), wherein
the optical coherent detecting unit causes the optical signal in which a plurality of channels is frequency-multiplexed, each of the channels is polarization-multiplexed into an X-polarized wave and a Y-polarized wave by a digital coherent method, and each of the X-polarized wave and the Y-polarized wave is modulated into an I signal and a Q signal of orthogonal phases to interfere with single interference light and performs coherent detection, and outputs an XI signal, an XQ signal, a YI signal, and a YQ signal each of which is formed by an analog electrical signal,
the analog signal separating unit branches each of the XI signal, the XQ signal, the YI signal, and the YQ signal from the optical coherent detecting unit by the number of branches of N (N is a natural number of 2 or more) in a frequency domain, and outputs analog electrical signals branched in the frequency domain as an XI-1 signal to an XI-N signal, an XQ-1 signal to an XQ-N signal, a YI-1 signal to a YI-N signal, and a YQ-1 signal to a YQ-N signal each of which is an analog signal frequency-converted into a frequency equal to or lower than a set frequency, the set frequency being set on a basis of a frequency domain in which the analog-digital converting unit can perform analog-digital conversion,
to the analog-digital converting unit, the XI-1 signal to the XI-N signal, the XQ-1 signal to the XQ-N signal, the YI-1 signal to the YI-N signal, and the YQ-1 signal to the YQ-N signal from the analog signal separating unit are input, and the analog-digital converting unit performs the analog-digital conversion on each of the XI-1 signal to the XI-N signal, the XQ-1 signal to the XQ-N signal, the YI-1 signal to the YI-N signal, and the YQ-1 signal to the YQ-N signal which have been input, and outputs resultant signals as digital signals,
with the digital signals of the XI-1 signal to the XI-N signal, the XQ-1 signal to the XQ-N signal, the YI-1 signal to the YI-N signal, and the YQ-1 signal to the YQ-N signal input in parallel from the analog-digital converting unit, the IQ combining unit combines the I signal and the Q signal for the X-polarized wave to generate a complex signal in a digital domain for the X-polarized wave, and combines the I signal and the Q signal for the Y-polarized wave to generate a complex signal in the digital domain for the Y-polarized wave,
the channel separating unit performs frequency conversion on a complex signal on a low-band side and a complex signal on a high-band side corresponding to the X-polarized wave, and a complex signal on a low-band side and a complex signal on a high-band side corresponding to the Y-polarized wave, which are IQ-combined by the IQ combining unit, in the digital domain, and frequency-separates resultant signals into complex signals in the digital domain returned to baseband signals, corresponding to the plurality of channels, and
the channel individual demodulating unit demodulates each of the complex signals in the digital domain frequency-separated by the channel separating unit to obtain a digital signal of a corresponding one of the plurality of channels.

11. The optical receiving device according to claim 10, wherein a frequency (fc) of the interference light is a frequency to separate a signal component in a band on a low-frequency (f_{LO1}) side and a signal component in a band on a high-frequency (f_{LO1}) side of frequencies of the plurality of channels frequency-multiplexed in the optical signal with the frequency (fc) of the interference light in a centrosymmetric manner.

12. The optical receiving device according to claim 11, wherein
the number of branches of N is 2,
the XI-1 signal is a signal having a signal component in a frequency band on a low-band side and the XI-2 signal is a signal having a signal component in a frequency band on a high-band side,
the XQ-1 signal is a signal having a signal component in a frequency band on a low-band side and the XQ-2 signal is a signal having a signal component in a frequency band on a high-band side,
the YI-1 signal is a signal having a signal component in a frequency band on a low-band side and the YI-2 signal is a signal having a signal component in a frequency band on a high-band side, and
the YQ-1 signal is a signal having a signal component in a frequency band on a low-band side and the YQ-2 signal is a signal having a signal component in a frequency band on a high-band side.

13. The optical receiving device according to claim 12, wherein
the analog signal separating unit includes an XI analog signal separator (130XI), an XQ analog signal separator (130XQ), a YI analog signal separator (130YI), and a YQ analog signal separator (130YQ),
each of the XI analog signal separator, the XQ analog signal separator, the YI analog signal separator, and the YQ analog signal separator includes a signal separating unit (131) and a down-conversion unit,
the signal separating unit includes
a splitter unit (131A) to split a corresponding analog electrical signal from the optical coherent detecting unit into two analog electrical signals by the number of branches of 2 in the frequency domain,
a low-band side passing unit (131B) to pass a frequency band on a low-band side and block a frequency band on a high-band side in one of the analog electrical signals from the splitter unit, and
a high-band side passing unit (131C) to pass a frequency band on a high-band side and block a frequency band on a low-band side in the other of the analog electrical signals from the splitter unit, and
the down-conversion unit includes
a low-band side down-conversion unit (132) to output an analog electrical signal on the low-band side from the low-band side passing unit to the analog-digital converting unit as an analog electrical signal frequency-converted into a frequency equal to or lower than the set frequency, and
a high-band side down-conversion unit (133) to output an analog electrical signal on the high-band side from the high-band side passing unit to the analog-digital converting unit as an analog electrical signal frequency-converted into a frequency equal to or lower than the set frequency.

14. The optical receiving device according to claim 11, wherein
the number of branches of N is 3 or more,
the XI-1 signal is a signal having a signal component in a frequency band on a low-band side, the XI-N signal is a signal having a signal component in a frequency band on a high-band side, and a signal between the XI-1 signal and the XI-N signal is a signal having a signal component in a frequency band on a middle-band side between the frequency band on the low-band side and the frequency band on the high-band side,
the XQ-1 signal is a signal having a signal component in a frequency band on a low-band side, the XQ-N signal is a signal having a signal component in a frequency band on a high-band side, and a signal between the XQ-1 signal and the XQ-N signal is a signal having a signal component in a frequency band on a middle-band side between the frequency band on the low-band side and the frequency band on the high-band side,
the YI-1 signal is a signal having a signal component in a frequency band on a low-band side, the YI-N signal is a signal having a signal component in a frequency band on a high-band side, and a signal between the YI-1 signal and the YI-N signal is a signal having a signal component in a frequency band on a middle-band side between the frequency band on the low-band side and the frequency band on the high-band side, and
the YQ-1 signal is a signal having a signal component in a frequency band on a low-band side, the YQ-N signal is a signal having a signal component in a frequency band on a high-band side, and a signal between the YQ-1 signal and the YQ-N signal is a signal having a signal component in a frequency band on a middle-band side between the frequency band on the low-band side and the frequency band on the high-band side.

15. The optical receiving device according to claim 14, wherein
the analog signal separating unit includes an XI analog signal separator (130XI), an XQ analog signal separator (130XQ), a YI analog signal separator (130YI), and a YQ analog signal separator (130YQ),
each of the XI analog signal separator, the XQ analog signal separator, the YI analog signal separator, and the YQ analog signal separator includes a signal separating unit (131) and a down-conversion unit,
the signal separating unit includes
a splitter unit (131A) to split a corresponding analog electrical signal from the optical coherent detecting unit into N analog electrical signals of a low-band side analog electrical signal, a high-band side analog electrical signal, and (N - 2) middle-band side analog electrical signals by the number of branches of N in the frequency domain,
a low-band side passing unit (131B) to pass a frequency band on a low-band side and block a frequency band on a high-band side in the low-band side analog electrical signal from the splitter unit,
a high-band side passing unit (131C) to pass a frequency band on a high-band side and block a frequency band on a low-band side in the high-band side analog electrical signal from the splitter unit, and
a middle-band side passing unit (131D) to pass a frequency band on a middle-band side between a frequency band on a high-band side and a frequency band on a low-band side and block a frequency band other than the frequency band on the middle-band side in the middle-band side analog electrical signal from the splitter unit, and
the down-conversion unit includes
a low-band side down-conversion unit (132) to output an analog electrical signal on the low-band side from the low-band side passing unit to the analog-digital converting unit as an analog electrical signal frequency-converted into a frequency equal to or lower than the set frequency,
a high-band side down-conversion unit (133) to output an analog electrical signal on the high-band side from the high-band side passing unit to the analog-digital converting unit as an analog electrical signal frequency-converted into a frequency equal to or lower than the set frequency, and
a middle-band side down-conversion unit (134) to output an analog electrical signal on the middle-band side from the middle-band side passing unit to the analog-digital converting unit as an analog electrical signal frequency-converted into a frequency equal to or lower than the set frequency.

16. The optical receiving device according to claim 10, wherein
the number of the channels in the optical signal is an odd number (a natural number excluding 1), and
a frequency of the interference light is a frequency of a carrier of a channel located at a center of the plurality of channels in the frequency domain.

17. The optical receiving device according to claim 16, wherein
the number of branches of N is 2,
the XI-1 signal is a signal having a signal component in a frequency band on a low-band side and the XI-2 signal is a signal having a signal component in a frequency band on a high-band side,
the XQ-1 signal is a signal having a signal component in a frequency band on a low-band side and the XQ-2 signal is a signal having a signal component in a frequency band on a high-band side,
the YI-1 signal is a signal having a signal component in a frequency band on a low-band side and the YI-2 signal is a signal having a signal component in a frequency band on a high-band side, and
the YQ-1 signal is a signal having a signal component in a frequency band on a low-band side and the YQ-2 signal is a signal having a signal component in a frequency band on a high-band side.

18. The optical receiving device according to claim 17, wherein
the analog signal separating unit includes an XI analog signal separator (130XI), an XQ analog signal separator (130XQ), a YI analog signal separator (130YI), and a YQ analog signal separator (130YQ),
each of the XI analog signal separator, the XQ analog signal separator, the YI analog signal separator, and the YQ analog signal separator includes a signal separating unit (131) and a down-conversion unit,
the signal separating unit includes
a splitter unit (131A) to split a corresponding analog electrical signal from the optical coherent detecting unit into two analog electrical signals by the number of branches of 2 in the frequency domain,
a low-band side passing unit (131B) to output an analog electrical signal obtained by passing a frequency band on a low-band side and blocking a frequency band on a high-band side in one of the analog electrical signals from the splitter unit to the analog-digital converting unit, and
a high-band side passing unit (131C) to pass a frequency band on a high-band side and block a frequency band on a low-band side in the other of the analog electrical signals from the splitter unit, and
the down-conversion unit includes
a high-band side down-conversion unit (133) to output an analog electrical signal on the high-band side from the high-band side passing unit to the analog-digital converting unit as an analog electrical signal frequency-converted into a frequency equal to or lower than the set frequency.

19. The optical receiving device according to claim 16, wherein
the number of branches of N is 3 or more,
the XI-1 signal is a signal having a signal component in a frequency band on a low-band side, the XI-N signal is a signal having a signal component in a frequency band on a high-band side, and a signal between the XI-1 signal and the XI-N signal is a signal having a signal component in a frequency band on a middle-band side between the frequency band on the low-band side and the frequency band on the high-band side,
the XQ-1 signal is a signal having a signal component in a frequency band on a low-band side, the XQ-N signal is a signal having a signal component in a frequency band on a high-band side, and a signal between the XQ-1 signal and the XQ-N signal is a signal having a signal component in a frequency band on a middle-band side between the frequency band on the low-band side and the frequency band on the high-band side,
the YI-1 signal is a signal having a signal component in a frequency band on a low-band side, the YI-N signal is a signal having a signal component in a frequency band on a high-band side, and a signal between the YI-1 signal and the YI-N signal is a signal having a signal component in a frequency band on a middle-band side between the frequency band on the low-band side and the frequency band on the high-band side, and
the YQ-1 signal is a signal having a signal component in a frequency band on a low-band side, the YQ-N signal is a signal having a signal component in a frequency band on a high-band side, and a signal between the YQ-1 signal and the YQ-N signal is a signal having a signal component in a frequency band on a middle-band side between the frequency band on the low-band side and the frequency band on the high-band side.

20. The optical receiving device according to claim 19, wherein
the analog signal separating unit includes an XI analog signal separator (130XI), an XQ analog signal separator (130XQ), a YI analog signal separator (130YI), and a YQ analog signal separator (130YQ),
each of the XI analog signal separator, the XQ analog signal separator, the YI analog signal separator, and the YQ analog signal separator includes a signal separating unit (131) and a down-conversion unit,
the signal separating unit includes
a splitter unit (131A) to split a corresponding analog electrical signal from the optical coherent detecting unit into N analog electrical signals of a low-band side analog electrical signal, a high-band side analog electrical signal, and (N - 2) middle-band side analog electrical signals by the number of branches of N in the frequency domain,
a low-band side passing unit (131B) to output an analog electrical signal obtained by passing a frequency band on a low-band side and blocking a frequency band on a high-band side in the low-band side analog electrical signal from the splitter unit to the analog-digital converting unit,
a high-band side passing unit (131C) to pass a frequency band on a high-band side and block a frequency band on a low-band side in the high-band side analog electrical signal from the splitter unit, and
a middle-band side passing unit (131D) to pass a frequency band on a middle-band side between a frequency band on a high-band side and a frequency band on a low-band side and block a frequency band other than the frequency band on the middle-band side in the middle-band side analog electrical signal from the splitter unit, and
the down-conversion unit includes
a high-band side down-conversion unit (133) to output an analog electrical signal on the high-band side from the high-band side passing unit to the analog-digital converting unit as an analog electrical signal frequency-converted into a frequency equal to or lower than the set frequency, and
a middle-band side down-conversion unit (134) to output an analog electrical signal on the middle-band side from the middle-band side passing unit to the analog-digital converting unit as an analog electrical signal frequency-converted into a frequency equal to or lower than the set frequency.

## Patentansprüche

1. Optische Empfangsvorrichtung, umfassend:
eine kohärente optische Detektionseinheit (110);
eine analoge Signal-Separierungseinheit (130);
eine Analog-Digital-Wandlereinheit (300), welche ein optisches Signal nicht verarbeitet, in welchem eine Mehrzahl von Kanälen mit hoher Bandbreite und bei einer hohen Sampling-Rate Frequenz-gemultiplext ist;
eine Kanal-Separierungseinheit (420); und
eine individuelle Kanal-Demodulierungseinheit (430), wobei die kohärente optische Detektionseinheit das optische Signal, in welchem die Mehrzahl von Kanälen Frequenz-gemultiplext ist, dazu veranlasst, mit einzelnem Interferenzlicht zu interferieren, und kohärente Detektion durchführt und ein analoges elektrisches Signal ausgibt,
wobei die analoge Signal-Separierungseinheit das analoge elektrische Signal von der kohärenten optischen Detektionseinheit um die Anzahl von Zweigen von N (N ist eine natürliche Zahl von 2 oder mehr) in einer Frequenzdomäne verzweigt und analoge elektrische Signale ausgibt,
welche in der Frequenzdomäne verzweigt sind, als entsprechende analoge elektrische Signale, von welchen jedes in eine Frequenz frequenzkonvertiert ist, welche gleich oder niedriger als eine festgelegte Frequenz ist, wobei die festgelegte Frequenz auf Grundlage einer Frequenzdomäne festgelegt wird, in welcher die Analog-Digital-Wandlereinheit eine Analog-Digital-Wandlung durchführen kann,
wobei die Analog-Digital-Wandlereinheit die Analog-Digital-Wandlung auf jedes der analogen elektrischen Signale durchführt, welche von der analogen Signal-Separierungseinheit verzweigt und in die Frequenz gleich oder niedriger als die festgelegte Frequenz gewandelt werden, und resultierende Signale als digitale Signale ausgibt,
wobei die Kanal-Separierungseinheit eine Frequenzwandlung auf die digitalen Signale durchführt, welche von der Analog-Digital-Wandlereinheit in einer digitalen Domäne ausgegeben werden, die digitalen Signale zu Basisband-Signalen zurückführt und die Basisband-Signale frequenzsepariert, entsprechend der Mehrzahl von Kanälen, und
wobei die individuelle Kanal-Demodulierungseinheit jedes der Signale demoduliert, welche von der Kanal-Separierungseinheit frequenzsepariert werden, um ein digitales Signal von einem entsprechenden der Mehrzahl von Kanälen zu erhalten.

2. Optische Empfangsvorrichtung nach Anspruch 1, wobei eine Frequenz (fc) des Interferenzlichts eine Frequenz zum Separieren einer Signalkomponente in einem Band auf einer Tieffrequenz (f_{LO1})-Seite und einer Signalkomponente in einem Band auf einer Hochfrequenz (f_{LO2})-Seite von Frequenzen der Mehrzahl von Kanälen ist, welche in dem optischen Signal Frequenz-gemultiplext werden, mit der Frequenz (fc) des Interferenzlichts in einer zentralsymmetrischen Weise.

3. Optische Empfangsvorrichtung nach Anspruch 2, wobei die analoge Signal-Separierungseinheit eine Signal-Separierungseinheit (131) und eine Herabwandler-Einheit umfasst,
wobei die Signal-Separierungseinheit umfasst:
eine Teilereinheit (131A) zum Teilen des analogen elektrischen Signals von der kohärenten optischen Detektionseinheit in zwei analoge elektrische Signale durch die Anzahl von Zweigen von 2 in der Frequenzdomäne,
eine Tiefbandseiten-Passiereinheit (131B) zum Passieren eines Frequenzbands an einer Tiefband-Seite und Blockieren eines Frequenzbands an einer Hochband-Seite in einem der analogen elektrischen Signale von der Teilereinheit, und
eine Hochbandseiten-Passiereinheit (131C) zum Passieren eines Frequenzbands an einer Hochband-Seite und Blockieren eines Frequenzbands an einer Tiefband-Seite in dem anderen der analogen elektrischen Signale von der Teilereinheit, und
die Herabwandler-Einheit umfasst:
eine Tiefbandseiten-Herabwandler-Einheit (132) zum Ausgeben eines analogen elektrischen Signals an der Tiefband-Seite von der Tiefbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist, und
eine Hochbandseiten-Herabwandler-Einheit (133) zum Ausgeben eines analogen elektrischen Signals an der Hochband-Seite von der Hochbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist.

4. Optische Empfangsvorrichtung nach Anspruch 2, wobei
die analoge Signal-Separierungseinheit eine Signal-Separierungseinheit (131) und eine Herabwandler-Einheit umfasst,
wobei die Signal-Separierungseinheit umfasst:
eine Teilereinheit (131A) zum Teilen des analogen elektrischen Signals von der kohärenten optischen Detektionseinheit in N analoge elektrische Signale eines analogen elektrischen Tiefbandseiten-Signals, eines analogen elektrischen Hochbandseiten-Signals und (N-2) analoge elektrische Mittelbandseiten-Signale durch die Anzahl von Zweigen von N in der Frequenzdomäne,
eine Tiefbandseiten-Passiereinheit (131B) zum Passieren eines Frequenzbands an einer Tiefband-Seite und Blockieren eines Frequenzbands an einer Hochband-Seite in dem analogen elektrischen Tiefbandseiten-Signal von der Teilereinheit,
eine Hochbandseiten-Passiereinheit (131C) zum Passieren eines Frequenzbands an einer Hochband-Seite und Blockieren eines Frequenzbands an einer Tiefband-Seite in dem analogen elektrischen Hochbandseiten-Signal von der Teilereinheit, und
eine Mittelbandseiten-Passiereinheit (131D) zum Passieren eines Frequenzbands an einer Mittelband-Seite zwischen einem Frequenzband an einer Hochband-Seite und einem Frequenzband an einer Tiefband-Seite und Blockieren eines Frequenzbands, welches von dem Frequenzband an der Mittelband-Seite verschieden ist, in dem analogen elektrischen Mittelbandseiten-Signal von der Teilereinheit, und
die Herabwandler-Einheit umfasst:
eine Tiefbandseiten-Herabwandler-Einheit (132) zum Ausgeben eines analogen elektrischen Signals an der Tiefband-Seite von der Tiefbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist,
eine Hochbandseiten-Herabwandler-Einheit (133) zum Ausgeben eines analogen elektrischen Signals an der Hochband-Seite von der Hochbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist, und
eine Mittelbandseiten-Herabwandler-Einheit (134) zum Ausgeben eines analogen elektrischen Signals an der Mittelband-Seite von der Mittelbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist.

5. Optische Empfangsvorrichtung nach Anspruch 1, wobei
die Anzahl der Kanäle in dem optischen Signal eine ungerade Anzahl ist (eine natürliche Zahl ausgenommen 1), und
eine Frequenz des Interferenzlichts eine Frequenz eines Trägers eines Kanals ist, welcher an einer Mitte der Mehrzahl von Kanälen in der Frequenzdomäne angeordnet ist.

6. Optische Empfangsvorrichtung nach Anspruch 5, wobei
die analoge Signal-Separierungseinheit eine Signal-Separierungseinheit (131) und eine Herabwandler-Einheit umfasst,
wobei die Signal-Separierungseinheit umfasst:
eine Teilereinheit (131A) zum Teilen des analogen elektrischen Signals von der kohärenten optischen Detektionseinheit in zwei analoge elektrische Signale durch die Anzahl von Zweigen von 2 in der Frequenzdomäne, eine Tiefbandseiten-Passiereinheit (131B) zum Ausgeben eines analogen elektrischen Signals, welches durch Passieren eines Frequenzbands an einer Tiefband-Seite und Blockieren eines Frequenzbands an einer Hochband-Seite in einem der analogen elektrischen Signale von der Teilereinheit zu der Analog-Digital-Wandlereinheit erhalten wird, und
eine Hochbandseiten-Passiereinheit (131C) zum Passieren eines Frequenzbands an einer Hochband-Seite und Blockieren eines Frequenzbands an einer Tiefband-Seite in dem anderen der analogen elektrischen Signale von der Teilereinheit, und
die Herabwandler-Einheit umfasst:
eine Hochbandseiten-Herabwandler-Einheit (133) zum Ausgeben eines analogen elektrischen Signals an der Hochband-Seite von der Hochbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist.

7. Optische Empfangsvorrichtung nach Anspruch 5, wobei
die analoge Signal-Separierungseinheit eine Signal-Separierungseinheit (131) und eine Herabwandler-Einheit umfasst,
wobei die Signal-Separierungseinheit umfasst:
eine Teilereinheit (131A) zum Teilen des analogen elektrischen Signals von der kohärenten optischen Detektionseinheit in N analoge elektrische Signale eines analogen elektrischen Tiefbandseiten-Signals, eines analogen elektrischen Hochbandseiten-Signals und (N-2) analoge elektrische Mittelbandseiten-Signale durch die Anzahl von Zweigen von N in der Frequenzdomäne,
eine Tiefbandseiten-Passiereinheit (131B) zum Ausgeben eines analogen elektrischen Signals, welches erhalten wird durch Passieren eines Frequenzbands an einer Tiefband-Seite und Blockieren eines Frequenzbands an einer Hochband-Seite in dem analogen elektrischen Tiefbandseiten-Signal von der Teilereinheit zu der Analog-Digital-Wandlereinheit,
eine Hochbandseiten-Passiereinheit (131C) zum Passieren eines Frequenzbands an einer Hochband-Seite und Blockieren eines Frequenzbands an einer Tiefband-Seite in dem analogen elektrischen Hochbandseiten-Signal von der Teilereinheit, und
eine Mittelbandseiten-Passiereinheit (131D) zum Passieren eines Frequenzbands an einer Mittelband-Seite zwischen einem Frequenzband an einer Hochband-Seite und einem Frequenzband an einer Tiefband-Seite und Blockieren eines Frequenzbands, welches von dem Frequenzband an der Mittelband-Seite verschieden ist, in dem analogen elektrischen Mittelbandseiten-Signal von der Teilereinheit, und
die Herabwandler-Einheit umfasst:
eine Hochbandseiten-Herabwandler-Einheit (133) zum Ausgeben eines analogen elektrischen Signals an der Hochband-Seite von der Hochbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist, und
eine Mittelbandseiten-Herabwandler-Einheit (134) zum Ausgeben eines analogen elektrischen Signals an der Mittelband-Seite von der Mittelbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist.

8. Optische Empfangsvorrichtung nach einem der Ansprüche 1 bis 7, wobei jeder der Kanäle in dem optischen Signal ein optisches Signal umfasst, welches in ein I-Signal und ein Q-Signal von orthogonalen Phasen moduliert ist.

9. Optische Empfangsvorrichtung nach einem der Ansprüche 1 bis 7, wobei jeder der Kanäle in dem optischen Signal ein optisches Signal umfasst, welches Polarisation-gemultiplext ist und in ein I-Signal und ein Q-Signal von orthogonalen Phasen moduliert ist.

10. Optische Empfangsvorrichtung, umfassend:
eine kohärente optische Detektionseinheit (110);
eine analoge Signal-Separierungseinheit (130);
eine Analog-Digital-Wandlereinheit (300), welche ein optisches Signal mit hoher Bandbreite und bei einer hohen Sampling-Rate nicht verarbeitet;
eine IQ-Kombinierungseinheit (410);
eine Kanal-Separierungseinheit (420); und
eine individuelle Kanal-Demodulierungseinheit (430), wobei die kohärente optische Detektionseinheit das optische Signal, in welchem eine Mehrzahl von Kanälen Frequenz-gemultiplext ist, jeder der Kanäle in eine X-polarisierte Welle und eine Y-polarisierte Welle durch ein digitales kohärentes Verfahren Polarisation-gemultiplext ist und jede aus der X-polarisierten Welle und der Y-polarisierten Welle in ein I-Signal und ein Q-Signal von orthogonalen Phasen moduliert ist, dazu veranlasst, mit einzelnem Interferenzlicht zu interferieren, und eine kohärente Detektion durchführt und ein XI-Signal, ein XQ-Signal, ein YI-Signal und ein YQ-Signal ausgibt, von welchen jedes durch ein analoges elektrisches Signal gebildet ist,
wobei die analoge Signal-Separierungseinheit jedes aus dem XI-Signal, dem XQ-Signal, dem YI-Signal und dem YQ-Signal von der kohärenten optischen Detektionseinheit durch die Anzahl von Zweigen von N (N ist eine natürliche Zahl von 2 oder mehr) in einer Frequenzdomäne verzweigt und analoge elektrische Signale ausgibt, welche in der Frequenzdomäne als ein XI-1-Signal zu einem XI-N-Signal, ein XQ-1-Signal zu einem XQ-N-Signal,
ein YI-1-Signal zu einem YI-N-Signal und ein YQ-1-Signal zu einem YQ-N-Signal verzweigt werden, von welchen jedes ein analoges Signal ist,
welches in eine Frequenz frequenzgewandelt ist, welche gleich oder niedriger als eine festgelegte Frequenz ist, wobei die festgelegte Frequenz auf einer Grundlage einer Frequenzdomäne festgelegt wird, in welcher die Analog-Digital-Wandlereinheit eine Analog-Digital-Wandlung durchführen kann,
wobei zu der Analog-Digital-Wandlereinheit das XI-1-Signal zu dem XI-N-Signal, das XQ-1-Signal zu dem XQ-N-Signal, das YI-1-Signal zu dem YI-N-Signal und das YQ-1-Signal zu dem YQ-N-Signal von der analogen Signal-Separierungseinheit eingegeben werden und die Analog-Digital-Wandlereinheit die Analog-Digital-Wandlung auf jedes von dem XI-1-Signal zu dem XI-N-Signal, dem XQ-1-Signal zu dem XQ-N-Signal, dem YI-1-Signal zu dem YI-N-Signal und dem YQ-1-Signal zu dem YQ-N-Signal durchführt, welche eingegeben worden sind, und resultierende Signale als digitale Signale ausgibt,
wobei mit den digitalen Signalen des XI-1-Signals zu dem XI-N-Signal, des XQ-1-Signals zu dem XQ-N-Signal, des YI-1-Signals zu dem YI-N-Signal und des YQ-1-Signals zu dem YQ-N-Signal, welche parallel von der Analog-Digital-Wandlereinheit eingegeben werden, die IQ-Kombinierungseinheit das I-Signal und das Q-Signal für die X-polarisierte Welle kombiniert, um ein komplexes Signal in einer digitalen Domäne für die X-polarisierte Welle zu erzeugen, und das I-Signal und das Q-Signal für die Y-polarisierte Welle kombiniert, um ein komplexes Signal in der digitalen Domäne für die Y-polarisierte Welle zu erzeugen,
wobei die Kanal-Separierungseinheit eine Frequenzwandlung auf ein komplexes Signal auf einer Tiefband-Seite und ein komplexes Signal auf einer Hochband-Seite entsprechend der X-polarisierten Welle und ein komplexes Signal auf einer Tiefband-Seite und ein komplexes Signal auf einer Hochband-Seite entsprechend der Y-polarisierten Welle durchführt, welche durch die IQ-Kombinierungseinheit IQ-kombiniert werden, in der digitalen Domäne, und
resultierende Signale in komplexe Signale in der digitalen Domäne frequenzsepariert, welche zu Basisband-Signalen zurückgegeben werden, entsprechend der Mehrzahl von Kanälen, und
die individuelle Kanal-Demodulierungseinheit jedes der komplexen Signale in der digitalen Domäne demoduliert, welche durch die Kanal-Separierungseinheit frequenzsepariert werden, um ein digitales Signal eines entsprechenden aus der Mehrzahl von Kanälen zu erhalten.

11. Optische Empfangsvorrichtung nach Anspruch 10, wobei eine Frequenz (fc) des Interferenzlichts eine Frequenz ist, um eine Signalkomponente in einem Band an einer Tieffrequenz (f_{LO1})-Seite und eine Signalkomponente in einem Band an einer Hochfrequenz (f_{LO1})-Seite von Frequenzen der Mehrzahl von Kanälen zu separieren, welche in dem optischen Signal Frequenz-gemultiplext werden, mit der Frequenz (fc) des Interferenzlichts in einer zentralsymmetrischen Weise.

12. Optische Empfangsvorrichtung nach Anspruch 11**,** wobei
die Anzahl von Zweigen von N 2 ist,
wobei das XI-1-Signal ein Signal ist, welches eine Signalkomponente in einem Frequenzband an einer Tiefband-Seite aufweist, und das XI-2-Signal ein Signal ist, welches eine Signalkomponente in einem Frequenzband an einer Hochband-Seite aufweist,
das XQ-1-Signal ein Signal ist, welches eine Signalkomponente in einem Frequenzband an einer Tiefband-Seite aufweist, und das XQ-2-Signal ein Signal ist, welches eine Signalkomponente in einem Frequenzband an einer Hochband-Seite aufweist,
das YI-1-Signal ein Signal ist, welches eine Signalkomponente in einem Frequenzband an einer Tiefband-Seite aufweist, und das YI-2-Signal ein Signal ist, welches eine Signalkomponente in einem Frequenzband an einer Hochband-Seite aufweist, und
das YQ-1-Signal ein Signal ist, welches eine Signalkomponente in einem Frequenzband an einer Tiefband-Seite aufweist, und das YQ-2-Signal ein Signal ist, welches eine Signalkomponente in einem Frequenzband an einer Hochband-Seite aufweist.

13. Optische Empfangsvorrichtung nach Anspruch 12, wobei
die analoge Signal-Separierungseinheit einen analogen XI-Signalseparator (130XI), einen analogen XQ-Signalseparator (130XQ), einen analogen YI-Signalseparator (130YI) und einen analogen YQ-Signalseparator (130YQ) umfasst,
wobei jeder aus dem analogen XI-Signalseparator, dem analogen XQ-Signalseparator, dem analogen YI-Signalseparator und dem analogen YQ-Signalseparator eine Signal-Separierungseinheit (131) und eine Herabwandler-Einheit umfasst,
wobei die Signal-Separierungseinheit umfasst:
eine Teilereinheit (131A) zum Teilen eines entsprechenden analogen elektrischen Signals von der kohärenten optischen Detektionseinheit in zwei analoge elektrische Signale durch die Anzahl von Zweigen von 2 in der Frequenzdomäne,
eine Tiefbandseiten-Passiereinheit (131B) zum Passieren eines Frequenzbands an einer Tiefband-Seite und Blockieren eines Frequenzbands an einer Hochband-Seite in einem der analogen elektrischen Signale von der Teilereinheit, und
eine Hochbandseiten-Passiereinheit (131C) zum Passieren eines Frequenzbands an einer Hochband-Seite und Blockieren eines Frequenzbands an einer Tiefband-Seite in dem anderen der analogen elektrischen Signale von der Teilereinheit, und
die Herabwandler-Einheit umfasst:
eine Tiefbandseiten-Herabwandler-Einheit (132) zum Ausgeben eines analogen elektrischen Signals an der Tiefband-Seite von der Tiefbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist, und
eine Hochbandseiten-Herabwandler-Einheit (133) zum Ausgeben eines analogen elektrischen Signals an der Hochband-Seite von der Hochbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist.

14. Optische Empfangsvorrichtung nach Anspruch 11**,** wobei
die Anzahl von Zweigen von N 3 oder mehr ist,
wobei das XI-1-Signal ein Signal ist, welches eine Signalkomponente in einem Frequenzband an einer Tiefband-Seite aufweist, das XI-N-Signal ein Signal ist, welches eine Signalkomponente in einem Frequenzband an einer Hochband-Seite aufweist, und ein Signal zwischen dem XI-1-Signal und dem XI-N-Signal ein Signal ist, welches eine Signalkomponente in einem Frequenzband an einer Mittelband-Seite zwischen dem Frequenzband an der Tiefbandseite und dem Frequenzband an der Hochband-Seite aufweist, das XQ-1-Signal ein Signal ist, welches eine Signalkomponente in einem Frequenzband an einer Tiefband-Seite aufweist, das XQ-N-Signal ein Signal ist, welches eine Signalkomponente in einem Frequenzband an einer Hochband-Seite aufweist, und ein Signal zwischen dem XQ-1-Signal und dem XQ-N-Signal ein Signal ist, welches eine Signalkomponente in einem Frequenzband an einer Mittelband-Seite zwischen dem Frequenzband an der Tiefbandseite und dem Frequenzband an der Hochband-Seite aufweist, das YI-1-Signal ein Signal ist, welches eine Signalkomponente in einem Frequenzband an einer Tiefband-Seite aufweist, das YI-N-Signal ein Signal ist, welches eine Signalkomponente in einem Frequenzband an einer Hochband-Seite aufweist, und ein Signal zwischen dem YI-1-Signal und dem YI-N-Signal ein Signal ist, welches eine Signalkomponente in einem Frequenzband an einer Mittelband-Seite zwischen dem Frequenzband an der Tiefbandseite und dem Frequenzband an der Hochband-Seite aufweist, und
das YQ-1-Signal ein Signal ist, welches eine Signalkomponente in einem Frequenzband an einer Tiefband-Seite aufweist, das YQ-N-Signal ein Signal ist, welches eine Signalkomponente in einem Frequenzband an einer Hochband-Seite aufweist, und ein Signal zwischen dem YQ-1-Signal und dem YQ-N-Signal ein Signal ist, welches eine Signalkomponente in einem Frequenzband an einer Mittelband-Seite zwischen dem Frequenzband an der Tiefbandseite und dem Frequenzband an der Hochband-Seite aufweist.

15. Optische Empfangsvorrichtung nach Anspruch 14, wobei
die analoge Signal-Separierungseinheit einen analogen XI-Signalseparator (130XI), einen analogen XQ-Signalseparator (130XQ), einen analogen YI-Signalseparator (130YI) und einen analogen YQ-Signalseparator (130YQ) umfasst,
wobei jeder aus dem analogen XI-Signalseparator, dem analogen XQ-Signalseparator, dem analogen YI-Signalseparator und dem analogen YQ-Signalseparator eine Signal-Separierungseinheit (131) und eine Herabwandler-Einheit umfasst,
wobei die Signal-Separierungseinheit umfasst:
eine Teilereinheit (131A) zum Teilen eines entsprechenden analogen elektrischen Signals von der kohärenten optischen Detektionseinheit in N analoge elektrische Signale eines analogen elektrischen Tiefbandseiten-Signals, eines analogen elektrischen Hochbandseiten-Signals und (N-2) analoge elektrische Mittelbandseiten-Signale durch die Anzahl von Zweigen von N in der Frequenzdomäne,
eine Tiefbandseiten-Passiereinheit (131B) zum Passieren eines Frequenzbands an einer Tiefband-Seite und Blockieren eines Frequenzbands an einer Hochband-Seite in dem analogen elektrischen Tiefbandseiten-Signal von der Teilereinheit,
eine Hochbandseiten-Passiereinheit (131C) zum Passieren eines Frequenzbands an einer Hochband-Seite und Blockieren eines Frequenzbands an einer Tiefband-Seite in dem analogen elektrischen Hochbandseiten-Signal von der Teilereinheit, und
eine Mittelbandseiten-Passiereinheit (131D) zum Passieren eines Frequenzbands an einer Mittelband-Seite zwischen einem Frequenzband an einer Hochband-Seite und einem Frequenzband an einer Tiefband-Seite und Blockieren eines Frequenzbands, welches von dem Frequenzband an der Mittelband-Seite verschieden ist, in dem analogen elektrischen Mittelbandseiten-Signal von der Teilereinheit, und
die Herabwandler-Einheit umfasst:
eine Tiefbandseiten-Herabwandler-Einheit (132) zum Ausgeben eines analogen elektrischen Signals an der Tiefband-Seite von der Tiefbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist,
eine Hochbandseiten-Herabwandler-Einheit (133) zum Ausgeben eines analogen elektrischen Signals an der Hochband-Seite von der Hochbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist, und
eine Mittelbandseiten-Herabwandler-Einheit (134) zum Ausgeben eines analogen elektrischen Signals an der Mittelband-Seite von der Mittelbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist.

16. Optische Empfangsvorrichtung nach Anspruch 10, wobei
die Anzahl von Kanälen in dem optischen Signal eine ungerade Anzahl ist (eine natürliche Zahl ausgenommen 1), und
eine Frequenz des Interferenzlichts eine Frequenz eines Trägers eines Kanals ist, welcher an einer Mitte der Mehrzahl von Kanälen in der Frequenzdomäne angeordnet ist.

17. Optische Empfangsvorrichtung nach Anspruch 16, wobei
die Anzahl von Zweigen von N 2 ist,
wobei das XI-1-Signal ein Signal ist, welches eine Signalkomponente in einem Frequenzband an einer Tiefband-Seite aufweist, und das XI-2-Signal ein Signal ist, welches eine Signalkomponente in einem Frequenzband an einer Hochband-Seite aufweist,
das XQ-1-Signal ein Signal ist, welches eine Signalkomponente in einem Frequenzband an einer Tiefband-Seite aufweist, und das XQ-2-Signal ein Signal ist, welches eine Signalkomponente in einem Frequenzband an einer Hochband-Seite aufweist,
das YI-1-Signal ein Signal ist, welches eine Signalkomponente in einem Frequenzband an einer Tiefband-Seite aufweist, und das YI-2-Signal ein Signal ist, welches eine Signalkomponente in einem Frequenzband an einer Hochband-Seite aufweist, und
das YQ-1-Signal ein Signal ist, welches eine Signalkomponente in einem Frequenzband an einer Tiefband-Seite aufweist, und das YQ-2-Signal ein Signal ist, welches eine Signalkomponente in einem Frequenzband an einer Hochband-Seite aufweist.

18. Optische Empfangsvorrichtung nach Anspruch 17, wobei
die analoge Signal-Separierungseinheit einen analogen XI-Signalseparator (130XI), einen analogen XQ-Signalseparator (130XQ), einen analogen YI-Signalseparator (130YI) und einen analogen YQ-Signalseparator (130YQ) umfasst,
wobei jeder aus dem analogen XI-Signalseparator, dem analogen XQ-Signalseparator, dem analogen YI-Signalseparator und dem analogen YQ-Signalseparator eine Signal-Separierungseinheit (131) und eine Herabwandler-Einheit umfasst,
wobei die Signal-Separierungseinheit umfasst:
eine Teilereinheit (131A) zum Teilen eines entsprechenden analogen elektrischen Signals von der kohärenten optischen Detektionseinheit in zwei analoge elektrische Signale durch die Anzahl von Zweigen von 2 in der Frequenzdomäne,
eine Tiefbandseiten-Passiereinheit (131B) zum Ausgeben eines analogen elektrischen Signals, welches durch Passieren eines Frequenzbands an einer Tiefband-Seite und Blockieren eines Frequenzbands an einer Hochband-Seite in einem der analogen elektrischen Signale von der Teilereinheit zu der Analog-Digital-Wandlereinheit erhalten wird, und
eine Hochbandseiten-Passiereinheit (131C) zum Passieren eines Frequenzbands an einer Hochband-Seite und Blockieren eines Frequenzbands an einer Tiefband-Seite in dem anderen der analogen elektrischen Signale von der Teilereinheit, und
die Herabwandler-Einheit umfasst:
eine Hochbandseiten-Herabwandler-Einheit (133) zum Ausgeben eines analogen elektrischen Signals an der Hochband-Seite von der Hochbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist.

19. Optische Empfangsvorrichtung nach Anspruch 16, wobei
die Anzahl von Zweigen von N 3 oder mehr ist,
wobei das XI-1-Signal ein Signal ist, welches eine Signalkomponente in einem Frequenzband an einer Tiefband-Seite aufweist, das XI-N-Signal ein Signal ist, welches eine Signalkomponente in einem Frequenzband an einer Hochband-Seite aufweist, und ein Signal zwischen dem XI-1-Signal und dem XI-N-Signal ein Signal ist, welches eine Signalkomponente in einem Frequenzband an einer Mittelband-Seite zwischen dem Frequenzband an der Tiefbandseite und dem Frequenzband an der Hochband-Seite aufweist, das XQ-1-Signal ein Signal ist, welches eine Signalkomponente in einem Frequenzband an einer Tiefband-Seite aufweist, das XQ-N-Signal ein Signal ist, welches eine Signalkomponente in einem Frequenzband an einer Hochband-Seite aufweist, und ein Signal zwischen dem XQ-1-Signal und dem XQ-N-Signal ein Signal ist, welches eine Signalkomponente in einem Frequenzband an einer Mittelband-Seite zwischen dem Frequenzband an der Tiefbandseite und dem Frequenzband an der Hochband-Seite aufweist, das YI-1-Signal ein Signal ist, welches eine Signalkomponente in einem Frequenzband an einer Tiefband-Seite aufweist, das YI-N-Signal ein Signal ist, welches eine Signalkomponente in einem Frequenzband an einer Hochband-Seite aufweist, und ein Signal zwischen dem YI-1-Signal und dem YI-N-Signal ein Signal ist, welches eine Signalkomponente in einem Frequenzband an einer Mittelband-Seite zwischen dem Frequenzband an der Tiefbandseite und dem Frequenzband an der Hochband-Seite aufweist, und
das YQ-1-Signal ein Signal ist, welches eine Signalkomponente in einem Frequenzband an einer Tiefband-Seite aufweist, das YQ-N-Signal ein Signal ist, welches eine Signalkomponente in einem Frequenzband an einer Hochband-Seite aufweist, und ein Signal zwischen dem YQ-1-Signal und dem YQ-N-Signal ein Signal ist, welches eine Signalkomponente in einem Frequenzband an einer Mittelband-Seite zwischen dem Frequenzband an der Tiefbandseite und dem Frequenzband an der Hochband-Seite aufweist.

20. Optische Empfangseinheit nach Anspruch 19, wobei
die analoge Signal-Separierungseinheit einen analogen XI-Signalseparator (130XI), einen analogen XQ-Signalseparator (130XQ), einen analogen YI-Signalseparator (130YI) und einen analogen YQ-Signalseparator (130YQ) umfasst,
wobei jeder aus dem analogen XI-Signalseparator, dem analogen XQ-Signalseparator, dem analogen YI-Signalseparator und dem analogen YQ-Signalseparator eine Signal-Separierungseinheit (131) und eine Herabwandler-Einheit umfasst,
wobei die Signal-Separierungseinheit umfasst:
eine Teilereinheit (131A) zum Teilen eines entsprechenden analogen elektrischen Signals von der kohärenten optischen Detektionseinheit in N analoge elektrische Signale eines analogen elektrischen Tiefbandseiten-Signals, eines analogen elektrischen Hochbandseiten-Signals und (N-2) analoge elektrische Mittelbandseiten-Signale durch die Anzahl von Zweigen von N in der Frequenzdomäne,
eine Tiefbandseiten-Passiereinheit (131B) zum Ausgeben eines analogen elektrischen Signals, welches erhalten wird durch Passieren eines Frequenzbands an einer Tiefband-Seite und Blockieren eines Frequenzbands an einer Hochband-Seite in dem analogen elektrischen Tiefbandseiten-Signal von der Teilereinheit zu der Analog-Digital-Wandlereinheit,
eine Hochbandseiten-Passiereinheit (131C) zum Passieren eines Frequenzbands an einer Hochband-Seite und Blockieren eines Frequenzbands an einer Tiefband-Seite in dem analogen elektrischen Hochbandseiten-Signal von der Teilereinheit, und
eine Mittelbandseiten-Passiereinheit (131D) zum Passieren eines Frequenzbands an einer Mittelband-Seite zwischen einem Frequenzband an einer Hochband-Seite und einem Frequenzband an einer Tiefband-Seite und Blockieren eines Frequenzbands, welches von dem Frequenzband an der Mittelband-Seite verschieden ist, in dem analogen elektrischen Mittelbandseiten-Signal von der Teilereinheit, und
die Herabwandler-Einheit umfasst:
eine Hochbandseiten-Herabwandler-Einheit (133) zum Ausgeben eines analogen elektrischen Signals an der Hochband-Seite von der Hochbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist, und
eine Mittelbandseiten-Herabwandler-Einheit (134) zum Ausgeben eines analogen elektrischen Signals an der Mittelband-Seite von der Mittelbandseiten-Passiereinheit zu der Analog-Digital-Wandlereinheit als ein analoges elektrisches Signal, welches in eine Frequenz frequenzgewandelt wird, welche gleich oder niedriger als die festgelegte Frequenz ist.

## Revendications

1. Dispositif de réception optique comprenant :
une unité de détection cohérente optique (110) ;
une unité de séparation de signal analogique (130) ;
une unité de conversion analogique-numérique (300) qui ne traite pas un signal optique dans lequel une pluralité de canaux sont multiplexés en fréquence avec une bande passante élevée et à une fréquence d'échantillonnage élevée ;
une unité de séparation de canal (420) ; et
une unité de démodulation individuelle de canal (430), dans lequel
l'unité de détection cohérente optique provoque l'interférence du signal optique, dans lequel la pluralité de canaux sont multiplexés en fréquence, avec une lumière d'interférence unique et effectue une détection cohérente, et émet un signal électrique analogique,
l'unité de séparation de signal analogique dérive le signal électrique analogique à partir de l'unité de détection cohérente optique par le nombre de branches de N (N est un nombre naturel supérieur ou égal à 2) dans un domaine fréquentiel, et délivre des signaux électriques analogiques dérivés dans le domaine fréquentiel en tant que signaux électriques analogiques respectifs, chacun étant converti en fréquence en une fréquence égale ou inférieure à une fréquence définie, la fréquence définie étant définie sur la base d'un domaine fréquentiel dans lequel l'unité de conversion analogique-numérique peut effectuer une conversion analogique-numérique,
l'unité de conversion analogique-numérique effectue la conversion analogique-numérique sur chacun des signaux électriques analogiques dérivés par l'unité de séparation de signaux analogiques et convertis en la fréquence égale ou inférieure à la fréquence définie, et délivre des signaux résultants sous forme de signaux numériques, l'unité de séparation de canaux effectue une conversion de fréquence sur les signaux numériques délivrés à partir de l'unité de conversion analogique-numérique dans un domaine numérique, renvoie les signaux numériques en signaux de bande de base, et sépare en fréquence les signaux de bande de base, correspondant à la pluralité de canaux, et
l'unité de démodulation individuelle de canal démodule chacun des signaux séparés en fréquence par l'unité de séparation de canal pour obtenir un signal numérique d'un canal correspondant parmi la pluralité de canaux.

2. Dispositif de réception optique selon la revendication 1, dans lequel une fréquence (fc) de la lumière d'interférence est une fréquence destinée à séparer une composante de signal dans une bande d'un côté basse fréquence (f_{LO1}) et une composante de signal dans une bande d'un côté haute fréquence (f_{LO2}) de fréquences de la pluralité de canaux multiplexés en fréquence dans le signal optique avec la fréquence (fc) de la lumière d'interférence de manière centrosymétrique.

3. Dispositif de réception optique selon la revendication 2, dans lequel
l'unité de séparation de signal analogique inclut une unité de séparation de signal (131) et une unité de transposition par abaissement de fréquence,
l'unité de séparation de signal inclut
un séparateur (131A) pour séparer le signal électrique analogique provenant de l'unité de détection cohérente optique en deux signaux électriques analogiques par le nombre de branches de 2 dans le domaine fréquentiel,
une unité de transfert côté bande basse (131B) pour faire passer une bande de fréquences d'un côté bande basse et bloquer une bande de fréquences d'un côté bande haute dans l'un des signaux électriques analogiques provenant du séparateur, et
une unité de transfert côté bande haute (131C) pour faire passer une bande de fréquences d'un côté bande haute et bloquer une bande de fréquences d'un côté bande basse dans l'autre des signaux électriques analogiques provenant du séparateur, et
l'unité de transposition par abaissement de fréquence inclut
une unité de transposition par abaissement de fréquence côté bande basse (132) pour délivrer un signal électrique analogique du côté bande basse à partir de l'unité de transfert côté bande basse à l'unité de conversion analogique-numérique sous forme de signal électrique analogique converti en fréquence, en une fréquence égale ou inférieure à la fréquence définie, et
une unité de transposition par abaissement de fréquence côté bande haute (133) pour délivrer un signal électrique analogique du côté bande haute de l'unité de transfert côté bande haute à l'unité de conversion analogique-numérique sous forme de signal électrique analogique converti en fréquence, en une fréquence égale ou inférieure à la fréquence définie.

4. Dispositif de réception optique selon la revendication 2, dans lequel
l'unité de séparation de signal analogique inclut une unité de séparation de signal (131) et une unité de transposition par abaissement de fréquence,
l'unité de séparation de signal inclut
un séparateur (131A) pour diviser le signal électrique analogique provenant de l'unité de détection cohérente optique en N signaux électriques analogiques d'un signal électrique analogique côté bande basse, un signal électrique analogique côté bande haute, et (N - 2) signaux électriques analogiques côté bande moyenne par le nombre de branches de N dans le domaine fréquentiel,
une unité de transfert côté bande basse (131B) pour faire passer une bande de fréquences d'un côté bande basse et bloquer une bande de fréquences d'un côté bande haute dans le signal électrique analogique côté bande basse provenant du séparateur,
une unité de transfert côté bande haute (131C) pour faire passer une bande de fréquences d'un côté bande haute et bloquer une bande de fréquences d'un côté bande basse dans le signal électrique analogique côté bande haute provenant du séparateur, et
une unité de transfert côté bande moyenne (131D) pour faire passer une bande de fréquences d'un côté bande moyenne entre une bande de fréquences d'un côté bande haute et une bande de fréquences d'un côté bande basse et bloquer une bande de fréquences autre que la bande de fréquences du côté bande moyenne dans le signal électrique analogique côté bande moyenne provenant du séparateur, et
l'unité de transposition par abaissement de fréquence inclut
une unité de transposition par abaissement de fréquence côté bande basse (132) pour délivrer un signal électrique analogique d'un côté bande basse à partir de l'unité de transfert côté bande basse à l'unité de conversion analogique-numérique sous forme de signal électrique analogique converti en fréquence, en une fréquence égale ou inférieure à la fréquence définie,
une unité de transposition par abaissement de fréquence côté bande haute (133) pour délivrer un signal électrique analogique d'un côté bande haute à partir de l'unité de transfert côté bande haute à l'unité de conversion analogique-numérique sous forme de signal électrique analogique converti en fréquence, en une fréquence égale ou inférieure à la fréquence définie, et
une unité de transposition par abaissement de fréquence côté bande moyenne (134) pour délivrer un signal électrique analogique d'un côté bande moyenne à partir de l'unité de transfert côté bande moyenne à l'unité de conversion analogique-numérique sous forme de signal électrique analogique converti en fréquence, en une fréquence égale ou inférieure à la fréquence définie.

5. Dispositif de réception optique selon la revendication 1, dans lequel
le nombre de canaux dans le signal optique est un nombre impair (un nombre naturel à l'exclusion de 1), et
une fréquence de la lumière d'interférence est une fréquence d'une porteuse d'un canal situé au centre de la pluralité de canaux dans le domaine fréquentiel.

6. Dispositif de réception optique selon la revendication 5, dans lequel
l'unité de séparation de signal analogique inclut une unité de séparation de signal (131) et une unité de transposition par abaissement de fréquence,
l'unité de séparation de signal inclut
un séparateur (131A) pour diviser le signal électrique analogique provenant de l'unité de détection cohérente optique en deux signaux électriques analogiques par le nombre de branches de 2 dans le domaine fréquentiel,
une unité de transfert côté bande basse (131B) pour délivrer un signal électrique analogique obtenu en faisant passer une bande de fréquences d'un côté bande basse et en bloquant une bande de fréquences d'un côté bande haute dans l'un des signaux électriques analogiques provenant du séparateur à l'unité de conversion analogique-numérique, et
une unité de transfert côté bande haute (131C) pour faire passer une bande de fréquences d'un côté bande haute et bloquer une bande de fréquences d'un côté bande basse dans l'autre des signaux électriques analogiques provenant du séparateur, et
l'unité de transposition par abaissement de fréquence inclut
une unité de transposition par abaissement de fréquence côté bande haute (133) pour délivrer un signal électrique analogique du côté bande haute à partir de l'unité de transfert côté bande haute à l'unité de conversion analogique-numérique sous forme de signal électrique analogique converti en fréquence, en une fréquence égale ou inférieure à la fréquence définie.

7. Dispositif de réception optique selon la revendication 5, dans lequel
l'unité de séparation de signal analogique inclut une unité de séparation de signal (131) et une unité de transposition par abaissement de fréquence,
l'unité de séparation de signal inclut
un séparateur (131A) pour diviser le signal électrique analogique provenant de l'unité de détection cohérente optique en N signaux électriques analogiques parmi un signal électrique analogique côté bande basse, un signal électrique analogique côté bande haute et (N - 2) signaux électriques analogiques côté bande moyenne par le nombre de branches de N dans le domaine fréquentiel,
une unité de transfert côté bande basse (131B) pour délivrer un signal électrique analogique obtenu en faisant passer une bande de fréquences d'un côté bande basse et en bloquant une bande de fréquences d'un côté bande haute dans le signal électrique analogique côté bande basse à partir du séparateur à l'unité de conversion analogique-numérique,
une unité de transfert côté bande haute (131C) pour faire passer une bande de fréquences d'un côté bande haute et bloquer une bande de fréquences d'un côté bande basse dans le signal électrique analogique côté bande haute provenant du séparateur, et
une unité de transfert côté bande moyenne (131D) pour faire passer une bande de fréquences d'un côté bande moyenne entre une bande de fréquences d'un côté bande haute et une bande de fréquences d'un côté bande basse et bloquer une bande de fréquences autre que la bande de fréquences du côté bande moyenne dans le signal électrique analogique côté bande moyenne provenant du séparateur, et
l'unité de transposition par abaissement de fréquence inclut
une unité de transposition par abaissement de fréquence côté bande haute (133) pour délivrer un signal électrique analogique d'un côté bande haute à partir de l'unité de transfert côté bande haute à l'unité de conversion analogique-numérique sous forme de signal électrique analogique converti en fréquence, en une fréquence égale ou inférieure à la fréquence définie, et
une unité de transposition par abaissement de fréquence côté bande moyenne (134) pour délivrer un signal électrique analogique d'un côté bande moyenne de l'unité de transfert côté bande moyenne à l'unité de conversion analogique-numérique sous forme de signal électrique analogique converti en fréquence, en une fréquence égale ou inférieure à la fréquence définie.

8. Dispositif de réception optique selon l'une quelconque des revendications 1 à 7, dans lequel chacun des canaux dans le signal optique comprend un signal optique modulé en un signal I et en un signal Q de phases orthogonales.

9. Dispositif de réception optique selon l'une quelconque des revendications 1 à 7, dans lequel chacun des canaux dans le signal optique comprend un signal optique qui est multiplexé en polarisation et modulé en un signal I et en un signal Q de phases orthogonales.

10. Dispositif de réception optique comprenant :
une unité de détection cohérente optique (110) ;
une unité de séparation de signal analogique (130) ;
une unité de conversion analogique-numérique (300) qui ne traite pas un signal optique avec une bande passante élevée et à une fréquence d'échantillonnage élevée ;
une unité de combinaison IQ (410) ;
une unité de séparation de canal (420) ; et
une unité de démodulation individuelle de canal (430), dans lequel
l'unité de détection cohérente optique provoque l'interférence du signal optique dans lequel une pluralité de canaux sont multiplexés en fréquence, chacun des canaux est multiplexé en polarisation en une onde polarisée X et en une onde polarisée Y par un procédé cohérent numérique, et chacune de l'onde polarisée X et de l'onde polarisée Y est modulée en un signal I et en un signal Q de phases orthogonales, avec une lumière d'interférence unique et effectue une détection cohérente, et délivre un signal XI, un signal XQ, un signal YI et un signal YQ, chacun étant formé par un signal électrique analogique,
l'unité de séparation de signal analogique dérive chacun du signal XI, du signal XQ, du signal YI et du signal YQ provenant de l'unité de détection cohérente optique par le nombre de branches de N (N est un nombre naturel supérieur ou égal à 2) dans un domaine fréquentiel, et délivre des signaux électriques analogiques dérivés dans le domaine fréquentiel sous la forme d'un signal XI-1 à un signal XI-N, d'un signal XQ-1 à un signal XQ-N, d'un signal YI-1 à un signal YI-N et d'un signal YQ-1 à un signal YQ-N, chacun étant un signal analogique converti en fréquence, en une fréquence égale ou inférieure à une fréquence définie, la fréquence définie étant définie sur la base d'un domaine fréquentiel dans lequel l'unité de conversion analogique-numérique peut effectuer une conversion analogique-numérique,
vers l'unité de conversion analogique-numérique, le signal XI-1 au signal XI-N, le signal XQ-1 au signal XQ-N, le signal YI-1 au signal YI-N et le signal YQ-1 au signal YQ-N de l'unité de séparation de signaux analogiques sont entrés, et l'unité de conversion analogique-numérique effectue la conversion analogique-numérique sur chacun du signal XI-1 au signal XI-N, du signal XQ-1 au signal XQ-N, du signal YI-1 au signal YI-N et du signal YQ-1 au signal YQ-N qui ont été entrés, et délivre des signaux résultants sous forme de signaux numériques,
les signaux numériques du signal XI-1 au signal XI-N, du signal XQ-1 au signal XQ-N, du signal YI-1 au signal YI-N et du signal YQ-1 au signal YQ-N étant entrés en parallèle à partir de l'unité de conversion analogique-numérique, l'unité de combinaison IQ combine le signal I et le signal Q pour l'onde polarisée X pour générer un signal complexe dans un domaine numérique pour l'onde polarisée X, et combine le signal I et le signal Q pour l'onde polarisée Y pour générer un signal complexe dans le domaine numérique pour l'onde polarisée Y,
l'unité de séparation de canal effectue une conversion de fréquence sur un signal complexe d'un côté bande basse et un signal complexe d'un côté bande haute correspondant à l'onde polarisée X, et un signal complexe d'un côté bande basse et un signal complexe d'un côté bande haute correspondant à l'onde polarisée Y, qui sont combinés IQ par l'unité de combinaison IQ, dans le domaine numérique, et
sépare en fréquences les signaux résultants en signaux complexes dans le domaine numérique renvoyés en signaux de bande de base, correspondant à la pluralité de canaux, et
l'unité de démodulation individuelle de canal démodule chacun des signaux complexes dans le domaine numérique, séparés en fréquences par l'unité de séparation de canal, pour obtenir un signal numérique d'un canal correspondant parmi la pluralité de canaux.

11. Dispositif de réception optique selon la revendication 10, dans lequel une fréquence (fc) de la lumière d'interférence est une fréquence pour séparer une composante de signal dans une bande d'un côté basse fréquence (f_{LO1}) et une composante de signal dans une bande d'un côté haute fréquence (f_{LO1}) de fréquences de la pluralité de canaux multiplexés en fréquence dans le signal optique avec la fréquence (fc) de la lumière d'interférence de manière centrosymétrique.

12. Dispositif de réception optique selon la revendication 11, dans lequel
le nombre de branches de N est de 2,
le signal XI-1 est un signal présentant une composante de signal dans une bande de fréquences d'un côté bande basse et le signal XI-2 est un signal présentant une composante de signal dans une bande de fréquences d'un côté bande haute,
le signal XQ-1 est un signal présentant une composante de signal dans une bande de fréquences d'un côté bande basse et le signal XQ-2 est un signal présentant une composante de signal dans une bande de fréquences d'un côté bande haute,
le signal YI-1 est un signal présentant une composante de signal dans une bande de fréquences d'un côté bande basse et le signal YI-2 est un signal présentant une composante de signal dans une bande de fréquences d'un côté bande haute, et
le signal YQ-1 est un signal présentant une composante de signal dans une bande de fréquences d'un côté bande basse et le signal YQ-2 est un signal présentant une composante de signal dans une bande de fréquences d'un côté bande haute.

13. Dispositif de réception optique selon la revendication 12, dans lequel
l'unité de séparation de signal analogique inclut un séparateur de signal analogique XI (130XI), un séparateur de signal analogique XQ (130XQ), un séparateur de signal analogique YI (130YI) et un séparateur de signal analogique YQ (130YQ),
chacun du séparateur de signal analogique XI, du séparateur de signal analogique XQ, du séparateur de signal analogique YI et du séparateur de signal analogique YQ inclut une unité de séparation de signal (131) et une unité de transposition par abaissement de fréquence,
l'unité de séparation de signal inclut
un séparateur (131A) pour diviser un signal électrique analogique correspondant de l'unité de détection cohérente optique en deux signaux électriques analogiques par le nombre de branches de 2 dans le domaine fréquentiel,
une unité de transfert côté bande basse (131B) pour faire passer une bande de fréquences d'un côté bande basse et bloquer une bande de fréquences d'un côté bande haute dans l'un des signaux électriques analogiques provenant du séparateur, et
une unité de transfert côté bande haute (131C) pour faire passer une bande de fréquences d'un côté bande haute et bloquer une bande de fréquences d'un côté bande basse dans l'autre des signaux électriques analogiques provenant du séparateur, et
l'unité de transposition par abaissement de fréquence inclut
une unité de transposition par abaissement de fréquence côté bande basse (132) pour délivrer un signal électrique analogique du côté bande basse à partir de l'unité de transfert côté bande basse à l'unité de conversion analogique-numérique sous forme de signal électrique analogique converti en fréquence, en une fréquence égale ou inférieure à la fréquence définie, et
une unité de transposition par abaissement de fréquence côté bande haute (133) pour délivrer un signal électrique analogique du côté bande haute à partir de l'unité de transfert côté bande haute à l'unité de conversion analogique-numérique sous forme de signal électrique analogique converti en fréquence, en une fréquence égale ou inférieure à la fréquence définie.

14. Dispositif de réception optique selon la revendication 11, dans lequel
le nombre de branches de N est supérieur ou égal à 3,
le signal XI-1 est un signal présentant une composante de signal dans une bande de fréquences d'un côté bande basse, le signal XI-N est un signal présentant une composante de signal dans une bande de fréquences d'un côté bande haute, et un signal entre le signal XI-1 et le signal XI-N est un signal présentant une composante de signal dans une bande de fréquences d'un côté bande moyenne entre la bande de fréquences du côté bande basse et la bande de fréquences du côté bande haute,
le signal XQ-1 est un signal présentant une composante de signal dans une bande de fréquences d'un côté bande basse, le signal XQ-N est un signal présentant une composante de signal dans une bande de fréquences d'un côté bande haute, et un signal entre le signal XQ-1 et le signal XQ-N est un signal présentant une composante de signal dans une bande de fréquences d'un côté bande moyenne entre la bande de fréquences du côté bande basse et la bande de fréquences du côté bande haute,
le signal YI-1 est un signal présentant une composante de signal dans une bande de fréquences d'un côté bande basse, le signal YI-N est un signal présentant une composante de signal dans une bande de fréquences d'un côté bande haute, et un signal entre le signal YI-1 et le signal YI-N est un signal présentant une composante de signal dans une bande de fréquences d'un côté bande moyenne entre la bande de fréquences du côté bande basse et la bande de fréquences du côté bande haute, et
le signal YQ-1 est un signal présentant une composante de signal dans une bande de fréquences d'un côté bande basse, le signal YQ-N est un signal présentant une composante de signal dans une bande de fréquences d'un côté bande haute, et un signal entre le signal YQ-1 et le signal YQ-N est un signal présentant une composante de signal dans une bande de fréquences d'un côté bande moyenne entre la bande de fréquences du côté bande basse et la bande de fréquences du côté bande haute.

15. Dispositif de réception optique selon la revendication 14, dans lequel
l'unité de séparation de signal analogique inclut un séparateur de signal analogique XI (130XI), un séparateur de signal analogique XQ (130XQ), un séparateur de signal analogique YI (130YI) et un séparateur de signal analogique YQ (130YQ), chacun du séparateur de signal analogique XI, du séparateur de signal analogique XQ, du séparateur de signal analogique YI et du séparateur de signal analogique YQ inclut une unité de séparation de signal (131) et une unité de transposition par abaissement de fréquence,
l'unité de séparation de signal inclut
un séparateur (131A) pour diviser un signal électrique analogique correspondant provenant de l'unité de détection cohérente optique en N signaux électriques analogiques parmi un signal électrique analogique côté bande basse, un signal électrique analogique côté bande haute et (N - 2) signaux électriques analogiques côté bande moyenne par le nombre de branches de N dans le domaine fréquentiel,
une unité de transfert côté bande basse (131B) pour faire passer une bande de fréquences d'un côté bande basse et bloquer une bande de fréquences d'un côté bande haute dans le signal électrique analogique côté bande basse provenant du séparateur,
une unité de transfert côté bande haute (131C) pour faire passer une bande de fréquences d'un côté bande haute et bloquer une bande de fréquences d'un côté bande basse dans le signal électrique analogique côté bande haute provenant du séparateur, et
une unité de transfert côté bande moyenne (131D) pour faire passer une bande de fréquences d'un côté bande moyenne entre une bande de fréquences d'un côté bande haute et une bande de fréquences d'un côté bande basse et bloquer une bande de fréquences autre que la bande de fréquences du côté bande moyenne dans le signal électrique analogique côté bande moyenne provenant du séparateur, et
l'unité de transposition par abaissement de fréquence inclut
une unité de transposition par abaissement de fréquence côté bande basse (132) pour délivrer un signal électrique analogique d'un côté bande basse à partir de l'unité de transfert côté bande basse à l'unité de conversion analogique-numérique sous forme de signal électrique analogique converti en fréquence, en une fréquence égale ou inférieure à la fréquence définie,
une unité de transposition par abaissement de fréquence côté bande haute (133) pour délivrer un signal électrique analogique d'un côté bande haute de l'unité de transfert côté bande haute à l'unité de conversion analogique-numérique sous forme de signal électrique analogique converti en fréquence, en une fréquence égale ou inférieure à la fréquence définie, et
une unité de transposition par abaissement de fréquence côté bande moyenne (134) pour délivrer un signal électrique analogique d'un côté bande moyenne de l'unité de transfert côté bande moyenne à l'unité de conversion analogique-numérique sous forme de signal électrique analogique converti en fréquence, en une fréquence égale ou inférieure à la fréquence définie.

16. Dispositif de réception optique selon la revendication 10, dans lequel
le nombre de canaux dans le signal optique est un nombre impair (un nombre naturel à l'exclusion de 1), et
une fréquence de la lumière d'interférence est une fréquence d'une porteuse d'un canal situé au centre de la pluralité de canaux dans le domaine fréquentiel.

17. Dispositif de réception optique selon la revendication 16, dans lequel
le nombre de branches de N est de 2,
le signal XI-1 est un signal présentant une composante de signal dans une bande de fréquences d'un côté bande basse et le signal XI-2 est un signal présentant une composante de signal dans une bande de fréquences d'un côté bande haute,
le signal XQ-1 est un signal présentant une composante de signal dans une bande de fréquences d'un côté bande basse et le signal XQ-2 est un signal présentant une composante de signal dans une bande de fréquences d'un côté bande haute,
le signal YI-1 est un signal présentant une composante de signal dans une bande de fréquences d'un côté bande basse et le signal YI-2 est un signal présentant une composante de signal dans une bande de fréquences d'un côté bande haute, et
le signal YQ-1 est un signal présentant une composante de signal dans une bande de fréquences d'un côté bande basse et le signal YQ-2 est un signal présentant une composante de signal dans une bande de fréquences d'un côté bande haute.

18. Dispositif de réception optique selon la revendication 17, dans lequel
l'unité de séparation de signal analogique inclut un séparateur de signal analogique XI (130XI), un séparateur de signal analogique XQ (130XQ), un séparateur de signal analogique YI (130YI) et un séparateur de signal analogique YQ (130YQ), chacun du séparateur de signal analogique XI, du séparateur de signal analogique XQ, du séparateur de signal analogique YI et du séparateur de signal analogique YQ inclut une unité de séparation de signal (131) et une unité de transposition par abaissement de fréquence,
l'unité de séparation de signal inclut
un séparateur (131A) pour diviser un signal électrique analogique correspondant de l'unité de détection cohérente optique en deux signaux électriques analogiques par le nombre de branches de 2 dans le domaine fréquentiel,
une unité de transfert côté bande basse (131B) pour délivrer un signal électrique analogique obtenu en faisant passer une bande de fréquences d'un côté bande basse et en bloquant une bande de fréquences d'un côté bande haute dans l'un des signaux électriques analogiques à partir du séparateur à l'unité de conversion analogique-numérique, et
une unité de transfert côté bande haute (131C) pour faire passer une bande de fréquences d'un côté bande haute et bloquer une bande de fréquences d'un côté bande basse dans l'autre des signaux électriques analogiques provenant du séparateur, et
l'unité de transposition par abaissement de fréquence inclut
une unité de transposition par abaissement de fréquence côté bande haute (133) pour délivrer un signal électrique analogique du côté bande haute de l'unité de transfert côté bande haute à l'unité de conversion analogique-numérique sous forme de signal électrique analogique converti en fréquence, en une fréquence égale ou inférieure à la fréquence définie.

19. Dispositif de réception optique selon la revendication 16, dans lequel
le nombre de branches de N est supérieur ou égal à 3,
le signal XI-1 est un signal présentant une composante de signal dans une bande de fréquences d'un côté bande basse, le signal XI-N est un signal présentant une composante de signal dans une bande de fréquences d'un côté bande haute, et un signal entre le signal XI-1 et le signal XI-N est un signal présentant une composante de signal dans une bande de fréquences d'un côté bande moyenne entre la bande de fréquences du côté bande basse et la bande de fréquences du côté bande haute,
le signal XQ-1 est un signal présentant une composante de signal dans une bande de fréquences d'un côté bande basse, le signal XQ-N est un signal présentant une composante de signal dans une bande de fréquences d'un côté bande haute, et un signal entre le signal XQ-1 et le signal XQ-N est un signal présentant une composante de signal dans une bande de fréquences d'un côté bande moyenne entre la bande de fréquences du côté bande basse et la bande de fréquences du côté bande haute,
le signal YI-1 est un signal présentant une composante de signal dans une bande de fréquences d'un côté bande basse, le signal YI-N est un signal présentant une composante de signal dans une bande de fréquences d'un côté bande haute, et un signal entre le signal YI-1 et le signal YI-N est un signal présentant une composante de signal dans une bande de fréquences d'un côté bande moyenne entre la bande de fréquences du côté bande basse et la bande de fréquences du côté bande haute, et
le signal YQ-1 est un signal présentant une composante de signal dans une bande de fréquences d'un côté bande basse, le signal YQ-N est un signal présentant une composante de signal dans une bande de fréquences d'un côté bande haute, et un signal entre le signal YQ-1 et le signal YQ-N est un signal présentant une composante de signal dans une bande de fréquences d'un côté bande moyenne entre la bande de fréquences du côté bande basse et la bande de fréquences du côté bande haute.

20. Dispositif de réception optique selon la revendication 19, dans lequel
l'unité de séparation de signal analogique inclut un séparateur de signal analogique XI (130XI), un séparateur de signal analogique XQ (130XQ), un séparateur de signal analogique YI (130YI) et un séparateur de signal analogique YQ (130YQ), chacun du séparateur de signal analogique XI, du séparateur de signal analogique XQ, du séparateur de signal analogique YI et du séparateur de signal analogique YQ inclut une unité de séparation de signal (131) et une unité de transposition par abaissement de fréquence,
l'unité de séparation de signal inclut
un séparateur (131A) pour diviser un signal électrique analogique correspondant provenant de l'unité de détection cohérente optique en N signaux électriques analogiques parmi un signal électrique analogique côté bande basse, un signal électrique analogique côté bande haute et (N - 2) signaux électriques analogiques côté bande moyenne par le nombre de branches de N dans le domaine fréquentiel,
une unité de transfert côté bande basse (131B) pour délivrer un signal électrique analogique obtenu en faisant passer une bande de fréquences d'un côté bande basse et en bloquant une bande de fréquences d'un côté bande haute dans le signal électrique analogique côté bande basse à partir du séparateur à l'unité de conversion analogique-numérique,
une unité de transfert côté bande haute (131C) pour faire passer une bande de fréquences d'un côté bande haute et bloquer une bande de fréquences d'un côté bande basse dans le signal électrique analogique côté bande haute provenant du séparateur, et
une unité de transfert côté bande moyenne (131D) pour faire passer une bande de fréquences d'un côté bande moyenne entre une bande de fréquences d'un côté bande haute et une bande de fréquences d'un côté bande basse et bloquer une bande de fréquences autre que la bande de fréquences du côté bande moyenne dans le signal électrique analogique côté bande moyenne provenant du séparateur, et
l'unité de transposition par abaissement de fréquence inclut
une unité de transposition par abaissement de fréquence côté bande haute (133) pour délivrer un signal électrique analogique d'un côté bande haute de l'unité de transfert côté bande haute à l'unité de conversion analogique-numérique sous forme de signal électrique analogique converti en fréquence, en une fréquence égale ou inférieure à la fréquence définie, et
une unité de transposition par abaissement de fréquence côté bande moyenne (134) pour délivrer un signal électrique analogique d'un côté bande moyenne de l'unité de transfert côté bande moyenne à l'unité de conversion analogique-numérique sous forme de signal électrique analogique converti en fréquence, en une fréquence égale ou inférieure à la fréquence définie.
